# EUROPEAN PATENT SPECIFICATION

(11) **EP 4 189 570 B1**
(45) Date of publication and mention of the grant of the patent: **10.09.2025**
(21) Application number: 21746675.4
(22) Date of filing: 16.07.2021
(51) Int. Cl.: G06F 21/57, H04L 9/40

(54) **ORCHESTRATION OF A SERVICE**
ORCHESTRIERUNG EINES DIENSTES
ORCHESTRATION D'UN SERVICE

(30) Priority: 26.07.2020 US 202063056701 P
(43) Date of publication of application: 07.06.2023
(73) Proprietor: Telefonaktiebolaget LM ERICSSON (PUBL), 16483 Stockholm (SE)
(72) Inventor: ARKKO, Jari, 02700 KAUNIAINEN (FI)
(74) Representative: Ericsson
(86) International application number: PCT/EP2021/069917
(87) International publication number: WO 2022/023068

(56) References cited:
- WO-A1-2018/075930
- WO-A1-2019/152119
- US-A1- 2019 138 294
- US-A1- 2019 140 919
- SURIANO ANTONIO ET AL: "Attestation of Trusted and Reliable Service Function Chains in the ETSI-NFV Framework", 2020 6TH IEEE CONFERENCE ON NETWORK SOFTWARIZATION (NETSOFT), IEEE, 29 June 2020 (2020-06-29), pages 479 - 486, XP033809875, DOI: 10.1109/NETSOFT48620.2020.9165316

## Description

### TECHNICAL FIELD

The present disclosure relates generally to communications systems and, more particularly, to Trusted Computing Slices.

### BACKGROUND

Network operators traditionally implement network functions using physical network nodes so that the network functions are tightly coupled with the infrastructure they run on. As a result, designing and deploying end-to-end services requires manual processes performed via Operation Support Systems (OSSs), with long lead times on the order of weeks or months.

Virtualization technologies such as Network Function Virtualization (NFV) offer network operators a software-centric approach to create, deploy, and manage their services with greater efficiency, flexibility, and cost-effectiveness. Virtualization abstracts the underlying infrastructure's hardware resources (e.g., compute, storage, and network resources) to define virtualized resources. These virtualized resources are leveraged for providing virtualized network functions (VNFs), e.g., in the form of routers, gateways, traffic analysis, firewalls, etc.. The VNFs can be chained with one another and/or with physical network functions (PNFs) as building blocks to offer a network service, e.g., which may comprise all or part of an end-to-end network service.

Orchestration refers to the process of controlling the resources and/or network services that rely on those resources. Orchestration may for instance involve controlling the access to and/or allocation of resources for VNFs or network services. Orchestration may alternatively or additionally involve instantiating, scaling, updating, and/or terminating network services, e.g., by coordinating groups of VNFs to realize the network services. Orchestration may therefore entail interpreting and translating a given service request from customer premises equipment into a configuration of resources (physical and/or virtualized), as needed for establishing the requested service for the customer premises equipment.

Although orchestration advantageously abstracts the details of service establishment from customer premises equipment, that abstraction inherently delegates significant autonomy over service establishment to the orchestrator and thereby creates obstacles for the customer premises equipment to control and ensure the security of the service.

SURIANO ANTONIO ET AL: "Attestation of Trusted and Reliable Service Function Chains in the ETSI-NFV Framework", 2020 6TH IEEE CONFERENCE ON NETWORK SOFTWARIZATION (NETSOFT), IEEE, 29 June 2020 (2020-06-29), pages 479-486, discloses a high-level orchestrator that combines, on demand, the suitable Virtual Network Functions into a Service Function Chain, based on the user requests, targeted security requirements, and measured reliability levels.

US 2019/0138294 A1 discloses systems and methods for enabling derivation and distribution of an attestation manifest for a software update image. In an example, these systems and methods include orchestration functions and communications, providing functionality and components for a software update process which also provides verification and attestation among multiple devices and operators.

US 2019/0140919 A1 discloses an architecture to enable verification, ranking, and identification of respective edge service properties and associated service level agreement (SLA) properties, such as in an edge cloud or other edge computing environment.

WO 2019/152119 A1 discloses systems and methods for distributing orchestration of network services using blockchain technology.

WO 2018/075930A1 discloses a systematic framework and approach that may be used to assess and measure the level of trust (or risk involved with regard to the various deployment models and services to be provided), and to aid secure delivery of the anticipated 5G services through slices, individual network functions, or traditional network infrastructure.

### SUMMARY

The invention is set out in the appended set of claims.

Some embodiments herein advantageously exploit trusted computing in the orchestration of a service for customer premises equipment. In doing so, some embodiments provide assurance to the customer premises equipment that a resource with which an orchestrator orchestrates the service complies with a trusted computing policy specified by the customer premises equipment. In one or more embodiments, for example, a resource must prove to the orchestrator, the customer premises equipment, or both that the resource complies with the trusted computing policy, as a condition for the resource to be used in the orchestration of the service. The resource may for instance prove this by providing, to the orchestrator, the customer premises equipment, or both, a remote attestation which attests to compliance with the trusted computing policy and/or attests to the resource having a certain identity, configuration, behavior, or property required by the trusted computing policy. The orchestrator, customer premises equipment, or both may then appraise or verify the provided remote attestation and condition use of the resource in orchestration of the service on satisfactory appraisal or verification. Some embodiments herein thereby advantageously abstract the details of service establishment from the customer premises equipment via orchestration, while at the same time providing the customer premises equipment with assurance about the security of the orchestrated service.

More particularly, embodiments herein include a method performed by an orchestrator. The method comprises receiving signaling that requests the orchestrator to orchestrate a service and that indicates a trusted computing policy with which a resource must prove compliance in order for the service to be orchestrated with that resource. The method in some embodiments further comprises sending a response to the signaling that indicates whether or not the orchestrator has orchestrated the service according to the received signaling.

Embodiments also include an orchestrator comprising processing circuitry and memory. The memory contains instructions executable by the processing circuitry whereby the orchestrator is configured to perform receiving signaling that requests the orchestrator to orchestrate a service and that indicates a trusted computing policy with which a resource must prove compliance in order for the service to be orchestrated with that resource. The orchestrator in some embodiments is further configured to perform sending a response to the signaling that indicates whether or not the orchestrator has orchestrated the service according to the received signaling.

Embodiments also include a method performed by customer premises equipment. The method comprises transmitting, from the customer premises equipment to an orchestrator, signaling that requests the orchestrator to orchestrate a service for the customer premises equipment and that indicates a trusted computing policy with which a resource must prove compliance in order for the service to be orchestrated with that resource. The method in some embodiments further comprises receiving, from the orchestrator, a response that indicates whether or not the orchestrator has orchestrated the service for the customer premises equipment according to the received signaling.

Embodiments also include a customer premises equipment comprising processing circuitry and memory. The memory containing instructions executable by the processing circuitry whereby the customer premises equipment is configured to perform transmitting, from the customer premises equipment to an orchestrator, signaling that requests the orchestrator to orchestrate a service for the customer premises equipment and that indicates a trusted computing policy with which a resource must prove compliance in order for the service to be orchestrated with that resource. The customer premises equipment in some embodiments is further configured to perform receiving, from the orchestrator, a response that indicates whether or not the orchestrator has orchestrated the service for the customer premises equipment according to the received signaling.

Embodiments herein also include a method performed by a resource equipment configurable to provide at least a part of a service to customer premises equipment. The method comprises receiving, from an orchestrator, signaling that requests the resource to prove that the resource complies with a trusted computing policy indicated by the signaling. The method may further comprise sending, to the orchestrator, a response which proves that the resource complies with a trusted computing policy indicated by the signaling.

Embodiments herein also include a resource equipment comprising processing circuitry and memory, the memory containing instructions executable by the processing circuitry whereby the resource equipment is configured to perform receiving, from an orchestrator, signaling that requests the resource to prove that the resource complies with a trusted computing policy indicated by the signaling. The resource equipment is further configured to perform sending, to the orchestrator, a response which proves that the resource complies with a trusted computing policy indicated by the signaling.

Embodiments herein also include a computer program product that includes a non-transitory computer readable medium storing program code configured for execution by a processor disclosed herein and configured to perform operations described herein.

Embodiments herein also include a computer program, when executed, performs operations described herein.

### BRIEF DESCRIPTION OF DRAWINGS

The accompanying drawings, which are included to provide a further understanding of the disclosure and are incorporated in and constitute a part of this application, illustrate certain non-limiting embodiments of inventive concepts.
Figure 1 is a diagram according to some embodiments.
Figure 2 illustrates a use of transport slices according to some embodiments.
Figure 3 is a diagram illustrating a connectivity requirement according to some embodiments.
Figure 4 is a diagram illustrating an example of a realization according to some embodiments.
Figures 5 is a diagram illustrating an example of a physical layout of a realization according to some embodiments.
Figure 6 is a diagram illustrating an attestation process according to some embodiments.
Figure 7 is a diagram illustrating a staged secure boot process according to some embodiments.
Figure 8 is a diagram illustrating a trusted computing enclaves and software to realize slice according to some embodiments.
Figure 9 is a diagram illustrating a Slice orchestrator with trusted computing according to some embodiments.
Figure 10 is a diagram flow illustrating an overall process according to some embodiments.
Figure 11 is a diagram illustrating additional details of one context for some embodiments in which orchestration is performed as part of NFV.
Figure 12 is a diagram illustrating additional details of some embodiments where the NFV framework corresponds to the NFV Management and Orchestration (MANO) architecture.
Figure 13-15 are flowcharts of operations that may be performed in accordance with some embodiments of the present disclosure.
Figure 16 is a block diagram of elements of an orchestrator that is configured according to some embodiments of the present disclosure.
Figure 17 is a block diagram of elements of consumer premises equipment that is configured according to some embodiments of the present disclosure.
Figure 18 is a block diagram of elements of resource equipment that is configured according to some embodiments of the present disclosure.
Figure 19 is a block diagram of a wireless network in accordance with some embodiments of the present disclosure.
Figure 20 is a block diagram of a user equipment or other terminal in accordance with some embodiments of the present disclosure.

### DETAILED DESCRIPTION

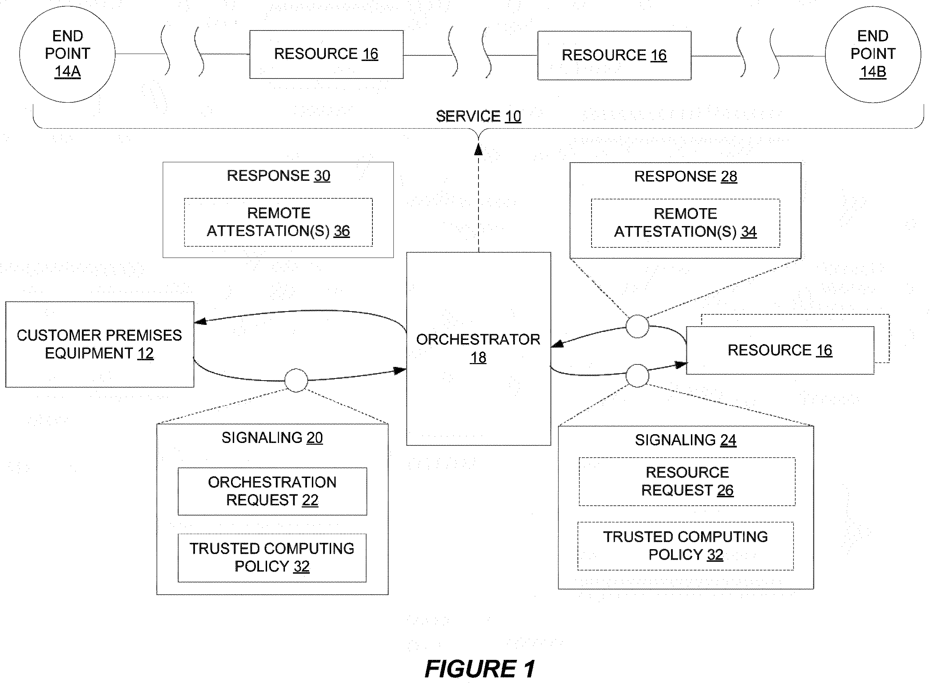

According to some embodiments shown in Figure 1, a service 10 is to be established for customer premises equipment 12, e.g., associated with a wireless communication network. The service 10 may for example be a network slice, a transport slice, or provide a private communication mechanism between two endpoints 14A, 14B, one of which may be the customer premises equipment 10 itself. The service 10 in these and other embodiments may rely on one or more underlying resources 16, e.g., chained together to provide respective parts of the service 10. Such resource(s) 16 may take the form of infrastructure, one or more network entities, or one or more network functions, and may be physical or virtualized. For example, the resource(s) 16 may include virtualized hardware resources (e.g., compute, storage, and network resources) leveraged for providing virtualized network functions (VNFs), e.g., to provide functionality in the form of routers, gateways, deep packet inspection (DPI), firewalls (FWs), etc.

As shown, the customer premises equipment 12 tasks an orchestrator 18 with orchestrating the service 10. Such orchestration may involve determining which resource(s) 16 are needed to establish the service 10, discovering which of those resource(s) 16 are available for providing respective part(s) of the service 10, and/or instantiating or configuring available resource(s) as needed to establish the service 10. To prompt and assist the orchestrator 18 in this regard, the customer premises equipment 12 as shown transmits to the orchestrator 18 signaling 20 that includes an orchestration request 22. The orchestration request 22 requests the orchestrator 18 to orchestrate the service 10, e.g., as specified by information included in the request 22 that describes the service 10 and/or one or more parameters for the service 10.

Having received this request 22, the orchestrator 18 in turn transmits to each of one or more resources 16 signaling 24 that includes a resource request 26. The resource request 26 may request information about the capability and/or availability of a resource 16 to provide at least a part of the service 10, e.g., as part of resource discovery. Alternatively or additionally, the resource request 26 may actually request a resource 16 to provide at least a part of the service 10. Regardless, the orchestrator 18 receives a response 28 from each resource 16 to which a request 26 was sent. The response 28 may provide any requested information such as information about the capability and/or availability of the resource, or may indicate whether the resource 16 accepts the orchestrator's request to provide at least a part of the service 10.

Based on the response(s) 28 from one or more resources 16, the orchestrator 18 may in turn transmit a response 30 to the customer premises equipment 30 to indicate whether or not the orchestrator 18 was able to orchestrate the service 10 as requested. Generally, then, orchestration of the service 10 in this way means that the customer premises equipment 12 delegates the task of resource selection and configuration to the orchestrator 18.

Some embodiments herein advantageously enable the customer premises equipment 10 to nonetheless control, influence, and/or verify how secure the resource(s) 16 are that the orchestrator 18 uses to orchestrate the service 10. Figure 1 in this regard shows that the customer premises equipment 12 according to some embodiments indicates a trusted computing policy 32 to the orchestrator 18. The trusted computing policy 32 may for instance be indicated by the signaling 20 that requests orchestration of the service 10, e.g., the trusted computing policy 32 may be included in or otherwise be associated with the orchestration request 22. This trusted computing policy 32 according to some embodiments specifies a requirement that a resource 16 with which the service 10 is to be orchestrated must have a certain identity, configuration, behavior, or property, e.g., which satisfies the consumer premises equipment 10 that the resource 16 is secure and/or trustworthy. For a resource 16 that is or implements a virtualized or software-based resource, for instance, the trusted computing policy 32 may specify that the resource 16 must be identified as a certain software image or version, be produced by a certain software vendor, and/or have a certain software state or configuration. For a resource 16 that is or hosts a physical resource, by contrast, the trusted computing policy 32 may specify that the resource 16 must have a certain hardware identifier or have been made by a certain manufacturer. In these and other embodiments, therefore, the trusted computing policy 32 may effectively specify a requirement that a resource 16 with which the service 10 is to be orchestrated must execute a certain software image or version, must execute software provided by a certain software provider, must execute software accredited by a certain software accreditor, must have certain hardware, must have hardware provided by a certain hardware manufacturer, must have hardware accredited by a certain hardware accreditor, or any combination thereof. As these examples demonstrate, then, the policy 32 may control, influence, and/or facilitate verification of how secure the resource(s) 16 are that the orchestrator 18 uses to orchestrate the service 10.

In fact, in some embodiments, a resource 16 must prove compliance with the trusted computing policy 32 in order for the service 10 to be orchestrated with that resource 16. That is, proof that the resource 16 complies with the trusted computing policy 32 is a condition on the resource 16 being used to orchestrate the service 10. For example, a resource 16 must prove that the resource 16 has a certain identity, configuration, behavior, or property required by the trusted computing policy 32, in order for the service to be orchestrated with that resource 16. That the resource 16 must prove compliance with the trusted computing policy 32 may be explicitly indicated by the signaling 20, 24 or may be implicitly indicated by inclusion of the trusted computing policy 32 in the signaling 20, 24.

In order to prove compliance with the trusted computing policy 32, a resource 16 must provide reliable evidence of such compliance. In some embodiments, proof of compliance may take the form of a remote attestation, as understood in the trusted computing context. A resource 16 may for instance provide a remote attestation which attests to compliance with the trusted computing policy 32 and/or attests to the resource 16 having a certain identity, configuration, behavior, or property required by the trusted computing policy 32. Such a remote attestation may thereby amount to a claim about the resource's compliance, identity, configuration, behavior, or property as related to the trusted computing policy 32, coupled with evidence which supports that claim. The evidence on which a remote attestation is based may include raw evidence, such as a measurement that indicates the identity, configuration, behavior, or property of a resource 16. Alternatively or additionally, the evidence on which a remote attestation is based may include reduced or summarized evidence, such as a hash of the raw evidence. The evidence on which a remote attestation is based may alternatively or additionally take the form of a credential (e.g., a cryptographic signature) provided by a trusted appraiser or evaluator of raw or summarized evidence, e.g., so as to vouch for the fact that the raw or summarized evidence supports the resource's claim. In yet other embodiments, a remote attestation may include a combination of the above, e.g., raw or summarized evidence provided in conjunction with a credential from a trusted appraiser or evaluator.

In one or more embodiments, for example, the trusted computing policy 32 effectively requires a resource 16 to provide the proof discussed above using a Trusted Platform Module (TPM) or other hardware device serving as a root of trust. To do so, the resource 16 must place into Platform Configuration Registers (PCRs) a measurement that reflects an identity, configuration, behavior, or property of the resource 16. The resource's TMP or other trusted hardware device cryptographically signs a report of the PCR contents as evidence of the resource's identity, configuration, behavior, or property. Appraisal or verification of such a report as being a valid signature over particular PCR values proves that the resource 16 complies with a trusted computing policy 32 that requires a resource have the identity, configuration, behavior, or property reflected by those PCR values.

No matter the particular form of a remote attestation required from a resource 16, Figure 1 shows that in some embodiments the orchestrator 18 indicates all or some of the trusted computing policy 32 to a resource 16, e.g., within signaling 24 associated with the resource request 26. Indicating the trusted computing policy 32 to the resource 16 in this way may enable the resource 16 to gather the right evidence to support a claim that the resource 16 complies with the trusted computing policy 32. For example, equipped with the trusted computing policy 32, the resource 16 may know which measurements to take and/or which identity, configuration, behavior, or property to provide evidence of. Having gathered such evidence in the form of a remote attestation, a resource 16 may provide such remote attestation to the orchestrator 18 in response to the signaling 24. Figure 1 in this regard shows that a resource may transmit a response 28 with a remote attestation 34 which attests to the resource's compliance with the trusted computing policy 32 and/or to the resource 16 having a certain identity, configuration, behavior, or property (which may be required by the trusted computing policy 32).

In some embodiments, a resource 16 must prove its compliance to the orchestrator 18. In this case, the orchestrator 18 may serve as an appraiser or verifier of any proof that the resource 16 provides to support its claim that the resource 16 complies with the trusted computing policy 32 and/or that the resource 16 has a certain identity, configuration, behavior, or property. Where this proof takes the form of a remote attestation, for example, the orchestrator 18 may appraise or verify the remote attestation, e.g., by checking whether any accompanying cryptographic signature is valid, checking whether any hash of the resource's measurements is included in a list of valid hashes reflecting an identity, configuration, behavior, or property required by the trusted computing policy 32, or the like. Regardless, if the orchestrator 18's appraisal or verification reveals a resource 16 does not in fact comply with the trusted computing policy 32, the orchestrator 18 may avoid or abort orchestrating the service 10 with that resource 16. The orchestrator 18 may thereby enforce the trusted computing policy 32 on behalf of or for the benefit of the customer premises equipment 12. If the orchestrator's appraisal or verification confirms the resource's compliance, on the other hand, the orchestrator 18 may initiate or continue a procedure for orchestrating the service 10 with that resource 16. The orchestrator 18 may thereby orchestrate or refrain from orchestrating the service 10 with a resource 16 depending respectively on whether or not the orchestrator 18 verifies the resource 16 complies with the trusted computing policy 32.

In some embodiments, the orchestrator 18 explicitly indicates to the customer premises equipment 12 that the resource(s) 16 with which the orchestrator 18 orchestrated the service 10 comply with the trusted computing policy 32. The orchestrator 18 may for instance explicitly indicate this in its response 30 to the customer premises equipment 12. In other embodiments, though, the orchestrator 18 implicitly indicates this by providing a response 30 that explicitly indicates the orchestrator 18 orchestrated the service 10 for the customer premises equipment 12. That is, by indicating successful orchestration according to the request 22, the orchestrator 18 implies that the resource(s) 16 with which the service 10 was orchestrated comply with the trusted computing policy 32 accompanying that request 22. Alternatively or additionally, the orchestrator 18 may effectively indicate that the resource(s) 16 with which the orchestrator 18 orchestrated the service 10 comply with the trusted computing policy 32 by itself providing a remote attestation 36 to the customer premises equipment 12. This remote attestation 36 may explicitly attest that the orchestrator 18 itself complies with the trusted computing policy 32, and in doing so implicitly attest that the resource(s) 16 with which the orchestrator 18 orchestrated the service 10 comply with the trusted computing policy 32. The customer premises equipment 12 upon receiving such a remote attestation 36 may appraise or verify it, on the basis that verification of the orchestrator's remote attestation 36 effectively or implicitly verifies that the resource(s) 16 used to orchestrate the service 10 comply with the trusted computing policy 32.

Proof that a resource 16 complies with the trusted computing policy 32 may alternatively or additionally be directly verified by the customer premises equipment 10 in other embodiments. In one such embodiment, the orchestrator 14 may request or obtain such proof from the resource 16 and then relay that proof to the customer premises equipment 10 so that the customer premises equipment 10 itself can appraise or verify the proof, e.g., in a similar way as described above for the orchestrator 18. As shown in Figure 1, for example, the orchestrator 18 may receive the remote attestation(s) 34 from the resource(s) 16 and relay those remote attestation(s) 34 to the customer premises equipment 12 as remote attestations 36. If the customer premises equipment's appraisal or verification of a remote attestation reveals a resource 16 does not comply with the trusted computing policy 32, the customer premises equipment 12 may declare its request 22 for orchestration of the service 10 unsatisfied. The customer premises equipment 12 in such case may inform the orchestrator 18 of the unsatisfactory orchestration to trigger a subsequent attempt at orchestration or to trigger remedial action for the orchestration failure. On the other hand, if the customer premises equipment's appraisal or verification of a remote attestation reveals a resource 16 does comply with the trusted computing policy 32, the customer premises equipment 12 may declare its request 22 for orchestration of the service 10 satisfied. The customer premises equipment 10 thereby enforces compliance with the trusted computing policy 32 as a condition for declaring the request 22 for orchestration of the service 10 satisfied.

Note that, in order to avoid orchestration failure due to non-compliance with the trusted computing policy 32, the orchestrator 14 in some embodiments proactively performs discovery of resources 16 for service orchestration on the basis of which resource(s) 16 claim to be able to comply with the trusted computing policy 32. Such discovery approach may advantageously reduce orchestration latency due to failed orchestration, and/or conserve signaling and computing resources that would otherwise be wasted on failed orchestration.

Note, too, that the customer premises equipment 12 may alternatively or additionally require that the orchestrator 14 itself comply with the trusted computing policy 32, e.g., as a condition for declaring the orchestration request 22 satisfied. The customer premises equipment 12 in such a case may request the orchestrator 14 to provide a remote attestation of compliance, so that the customer premises equipment 12 can appraise or verify the remote attestation. Requiring proof of compliance from not only the resource(s) 16 but also the orchestrator 14 may advantageously form a comprehensive chain or mesh of trust which provides assurance to the customer premises equipment 12 that the service 10 has been orchestrated securely and will be provided securely.

In some embodiments, nonetheless, the customer premises equipment 12 may only conditionally require proof of compliance with the trusted computing policy 32. In such a case, the signaling 20 to the orchestrator 14 may indicate one or more conditions under which proving compliance with the trusted computing policy 32 is required of a resource 16. The condition(s) may include, for instance, processing by a resource 16 of unencrypted data for the service 10. This way, if a resource 16 does not process unencrypted data for the service 10, but instead only has access to encrypted data for the service 10, the resource 16 need not prove compliance with the trusted computing policy 32. Indeed, such compliance may be unnecessary or moot given the nature of the resource's access to data of the service 10. These embodiments may thereby conserve signaling and processing resources that would otherwise be wasted on proof of unnecessary compliance.

Some embodiments may be exploited for orchestrating a service 10 in the form of a network slice or a transport slice. A network slice is a complete logical network that provides a service in its entirety with a specific assurance and function to a customer. Network slices can be used to implement specific quality of service (QoS) profiles, or even special software versions, different network nodes, and different functions.

Network slices in 5G networks are defined as end-to-end mechanisms. Underlying technologies, such as virtualization, virtual private networks, traffic engineering, and transport network slices may be used as resource 16 to implement these mobile-network specific slices. In these and other embodiments, then, resources 16 may be exemplified as and terms "network elements". Network virtualization is network management pertaining to treating different traffic categories in separate virtual networks, with independent lifecycle management and resource, technology, and topology choices. Virtual private networks (VPNs) can be implemented in various different ways, from operator provided Multiprotocol Label Switching (MPLS) networks to VPNs created from encrypted tunnels. Traffic engineering is the general practice of managing networks to set up appropriate performance for specific traffic flows or traffic from specific groups of users. Transport slices are an IETF concept under development, encompassing the management of different traffic engineering, routing, and VPN mechanisms within a single framework.

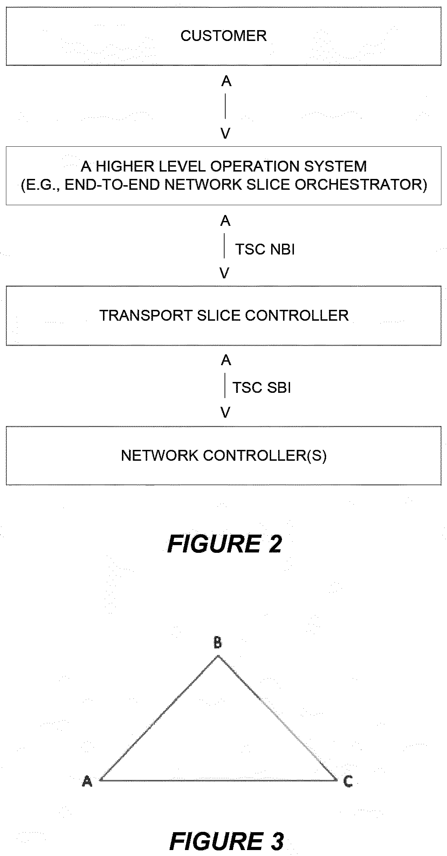

For example, the use of transport slices is shown in Figure 2. In this example, the customer of a 5G network has a need that requires the use of a slice. This need is communicated or entered into a higher-level operation system, e.g., the 5G operator's network management system. This system sets up the necessary mobile network functions for the slice. This can include, for instance, specific core network services, configuring the radio network to give appropriate resources and priority for the traffic in the slice, and so on.

The higher-level operation system also requests a different system, the Transport Slice Controller (TSC), to set up the appropriate transport connectivity between the mobile network functions. The TSC in some embodiments is one example of the orchestrator 18 in Figure 1. A "transport slice" represents such connectivity for a particular purpose. For instance, for a very high bandwidth application, the slice may require specific, high-bandwidth connectivity between the radio network and the core network. The task of the TSC is to set such connections up. The TSC has a north-bound interface (TSC NBI) that it receives requests on.

The request for a transport network slice gets mapped to a particular realization of the desired transport slice. For instance, a specific MPLS or VPN connection may be set up in the underlying network, to realize the necessary connectivity.

A number of transport slice services may be provided over a shared underlying network infrastructure. Each transport slice consists of both the overlay connectivity and a specific set of dedicated network resources and/or functions allocated in a shared underlay network to satisfy the needs of the transport slice consumer.

Using a transport slice typically involves the following [4]. The TSC takes requests from a management system or other application, which are then communicated via an NBI. This interface carries data objects the transport slice user provides, describing the needed transport slices in terms of topology, applicable service level objectives (SLO), and any monitoring and reporting requirements that may apply. Note that - in this context - "topology" means what the transport slice connectivity is meant to look like from the users perspective; it may be as simple as a list of mutually (and symmetrically) connected end points, or it may be complicated by details of connection asymmetry, per-connection SLO requirements, etc. These requests are assumed to be translated by one or more underlying systems, which are used to establish specific transport slice instances on top of an underlying network infrastructure. The TSC maintains a record of the mapping from user requests to slice instantiations, as needed to allow for subsequent control functions (such as modification or deletion of the requested slices), and as needed for any requested monitoring and reporting functions.

A transport slice can be realized in a network, using specific underlying technology or technologies. The creation of a new transport slice will be initiated in some embodiments with the following three steps:
**Step 1:** A higher level system requests connections with specific characteristics via NBI.
**Step 2:** This request will be processed by a Transport Slice Controller which specifies a mapping between northbound request to any IETF Services, Tunnels, and paths models.
**Step 3:** A series of requests for creation of services, tunnels and paths will be sent to the network to realize the transport slice.

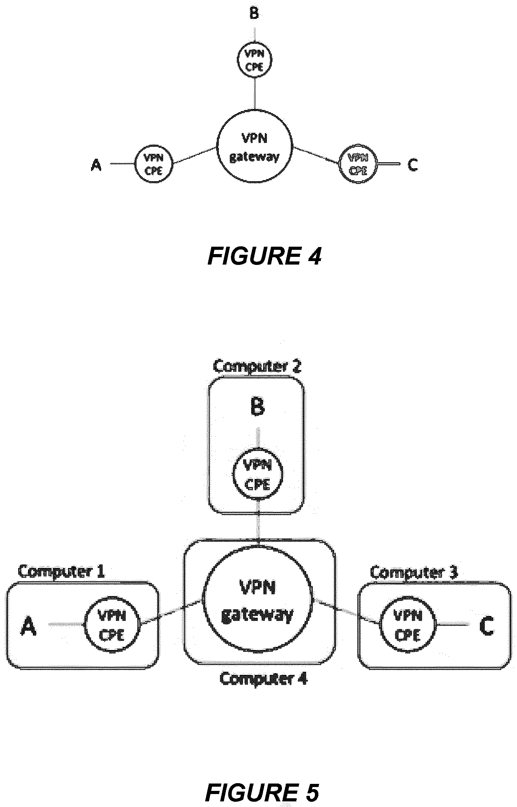

Note that a request for a transport slice expresses the customer-side connectivity need, e.g., connect A, B, and C, as shown in Figure 3 for an example. But the realization may use a more complex topology that involves network elements such as Ethernet switches, VPN gateways, MPLS nodes, or IP routers. For an example of a realization see Figure 4. This figure shows one intermediate VPN gateway between A, B, and C, and a set of three VPN CPEs (Customer Premises Equipment) next to the locations A, B, and C. The CPEs encrypt the traffic in VPN tunnels that terminate at the gateway. All connectivity goes via the gateway rather than directly, and the system relies on the gateway operating correctly, not revealing traffic to outsiders, etc. Once the traffic passes the gateway, it re-enters another encrypted tunnel to its final destination.

Figure 5 shows an example of a physical layout of the realization from Figure 4. The CPEs are software processes within the computer that hosts points A, B, and C. And the VPN gateway is a separate physical network element.

Some embodiments herein thereby exploit trusted computing technology in such an orchestration context. In this context, some embodiments employ trusted computing attestation such that a resource 16 can attest something about itself, such as that it runs on a particular type of central processing unit (CPU) and the software image being something. Such an attestation can be remote, i.e., an attestation can be sent to another entity (e.g., the orchestrator 18 or the customer premises equipment 12) observing the resource 16 running on trusted computing hardware. Attestation in some embodiments depends on a trust chain, such as the orchestrator 18 or the customer premises equipment 12 trusting a CPU manufacturer, the CPU manufacturer trusting that a key they put in a particular CPU is valid, and then that CPU signing a statement using that key.

In some embodiments, then, in order to run a part of the service 10 in a resource 16 require signed proof from the resource 16 that it is running a part of the service 10 on a particular type of CPU, running particular software, and that the CPU is trusted by the manufacturer. As a result, the Infrastructure Owner or other parties can not cause harm for the part of the service 10 running on that resource 16, e.g., by spying on the data processed within the service 10 or somehow subverting the results of the service 10.

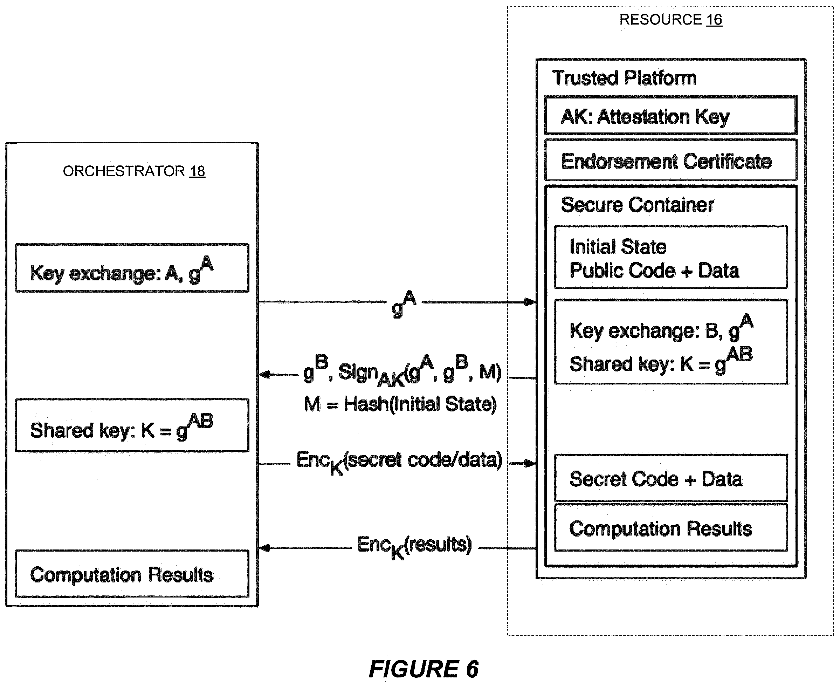

Proof of trusted computing policy compliance in some embodiments takes the form of an attestation based on the one shown in Figure 6, which shows the attestation from a resource 16 to the orchestrator 18. Although not shown, a similar attestation process in other embodiments may be applicable between a resource 16 and the customer premises equipment 10 directly. In any event, in some embodiments shown in Figure 6, a Trusted Platform at a resource 16 (i.e., the CPU associated with the resource 16) takes a hash of its initial state (e.g., software and configuration). It then uses the Attestation Key (AK) to sign this state. The Attestation Key is trusted by the CPU Manufacturer, which can be shown, for instance, via a certificate (i.e., a signature) of the CPU Manufacturer. With a signature from the Trusted Platform and another signature by its manufacturer, the orchestrator 16 now knows that, barring vulnerabilities in the CPU, the computations performed by the resource 16 are safe from everyone, including being safe from any spying that the owner of the resource 16 might do.

In Figure 6, the orchestrator 18 and the resource 16 also establish a secure communications channel protected by key K. This may be performed via a Diffie-Hellman exchange, but other methods are also possible. A secure channel is established in some embodiments because otherwise any assurance of the resource 16 about data privacy or faithful execution of the service 10 would be tainted, given that attackers could spy or change the data or results communicated between the orchestrator 18 and the resource 16.

An implementation of remote attestation according to some embodiments, then, may use three technologies as described by [8]:
- Identity: Platform identity can be based on, for instance, IEEE 802.1AR Device Identity. Some applications with a more-complex post-manufacture supply chain (e.g. Value Added Resellers), or with privacy concerns, may want to use an alternate mechanism for platform authentication.
- Attestation: Attestation of mutable elements throughout the life of fielded devices can be implemented, to provide an authenticated mechanism to report what software actually starts up on the device each time it reboots.
- Reference Integrity Measurements: Reference Integrity Measurements must be conveyed from the software authority (often the manufacturer for embedded systems) to the system in which verification will take place.

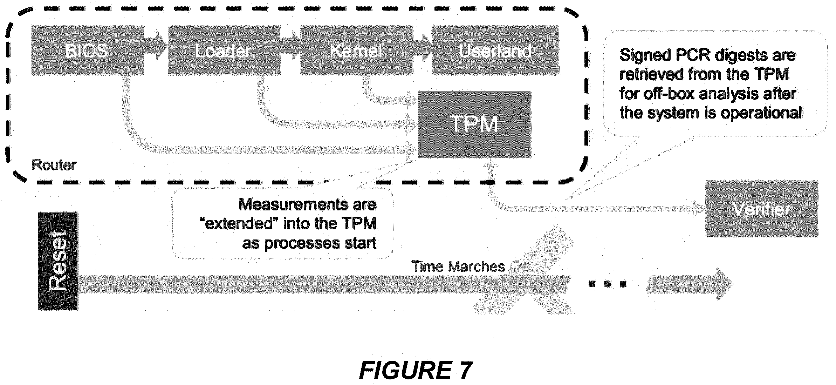

In one or more embodiments, attestation may involve the following. During startup of a resource 16, measurements (i.e., hashes computed as fingerprints of files) are "extended", or stored, in a Trusted Platform Module (TPM) at the resource 16, along with entries added to an informational log. The TPM is the crypto processor that holds the trusted computing keys and is capable of performing some of the main cryptographic operations. The measurement process in some embodiments generally follows the Chain of Trust model used in Measured Boot, where each stage of the system measures the next one before launching it. See Figure 7. Once the resource 16 is running and has operational network connectivity, a separate, trusted server or the orchestrator 18 can interrogate the resource 16 to retrieve the logs and a copy of the digests collected by hashing each software object, signed by a key known only to the TPM.

Although some embodiments have been generally exemplified as described above, other implementations of trusted computing may be used.

Some embodiments herein thereby advantageously exploit trusted computing in a context where there are multiple layers of frameworks. Here, a single user-visible application at the customer premises equipment 12 needs to depend on multiple underlying components, each consisting of their own network of computers collaborating on a specific task. Embodiments herein ensure this application at the customer premises equipment 12 that those components satisfy the security requirements it sets on its own computation elements.

In the context of slices, for example, a complex slice may require functions and network processing within multiple computing elements (as examples of resources 16). Some embodiments use trusted computing to ensure that all of those parts are secure. And some embodiments do so in a way that provides the customer of a slice assurance that trusted computing was used, and used in a manner that satisfies that customer's trust requirements. Moreover, some embodiments provide the customer a list of attestations from various computing elements about specific functions performed. Further, some embodiments enable the customer to know that these computing elements are the ones and all the ones that are serving the customer's slice.

Some embodiments accomplish this by adding a trusted computing request to a request for a slice. Alternatively or additionally, some embodiments have an orchestrator indirectly provide attestations from both itself and the network elements used to set up the slice.

Consider an example in which customer premises equipment 12 wishes to ensure that a VPN service shown in Figures 3 through 5 runs entirely in trusted hardware, and that the VPN elements (i.e., resources) run software from one of the trusted VPN providers. In this case, the customer premises equipment 12 trusts anything from vendor Vendor-1 and version of 1.2.3 of Opensource-1.

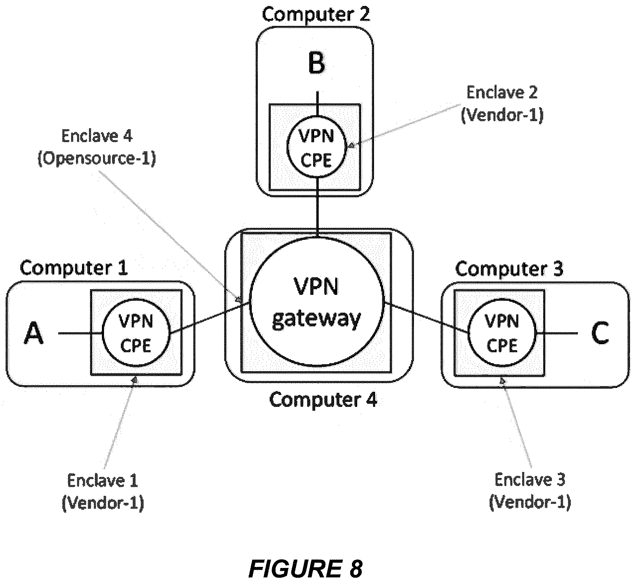

Figure 8 shows an example arrangement, i.e. how the requested slice may be realized in the four computing elements that form the slice. The four elements each run on trusted computing capable hardware. The necessary software for the VPN function (as an exemplary resource 16) runs in the trusted computing enclave, protected from outside influence, and capable of attesting what hardware and software it runs.

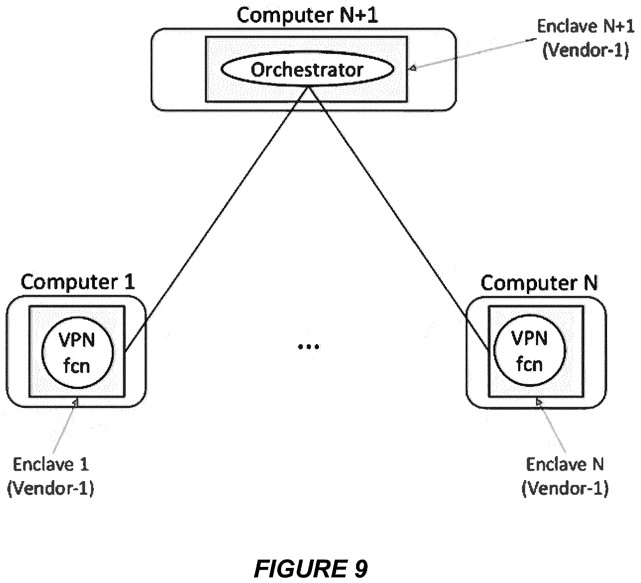

The slice orchestrator, as an example of orchestrator 18, sets this up according to some embodiments herein. Figure 9 shows one example in this regard.

In some embodiments, this is realized by the customer premises equipment 12 making a request to the orchestrator 18 to use trusted computing resources, along with information about the trusted manufacturers and software. The orchestrator 18 (also referred to as a management entity) receives this request. It sets up the slice, sets up the necessary trusted computing enclaves for the needed resources 16. The orchestrator 18 in some embodiments will also provide attestations both (a) from itself and (b) from the needed resources (e.g., network elements). This indirection via the orchestrator 18 ensures that the customer can verify that the orchestration process was run correctly, that all used resources are reported, and that the resources themselves rely on the trusted manufacturers and software.

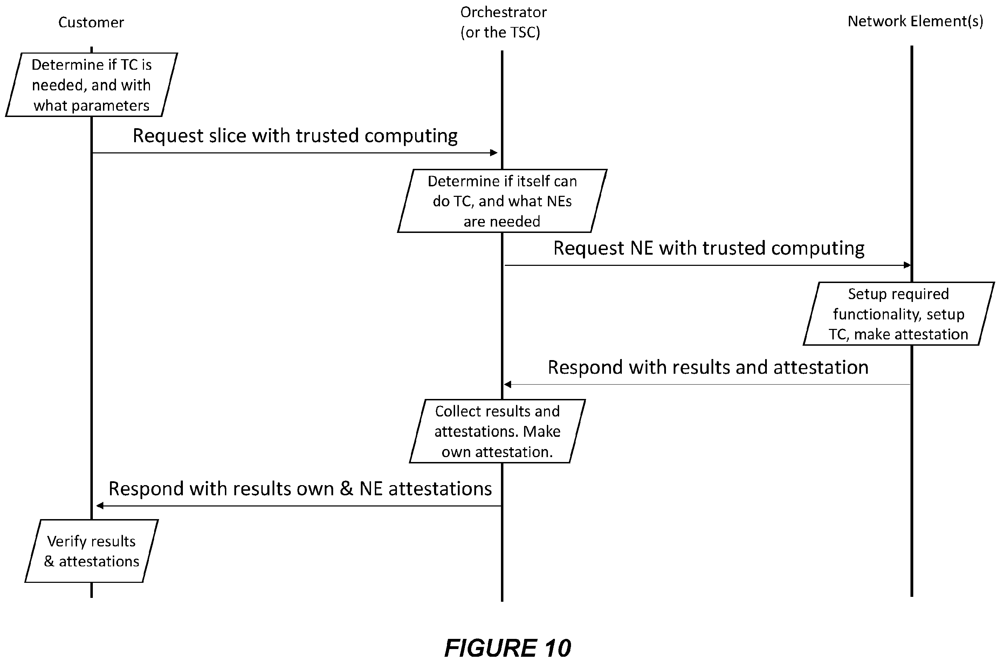

Figure 10 shows the overall process flow according to one exemplary embodiment, where the customer premises equipment 10 is represented as "customer", the orchestrator 18 is represented as "Orchestrator", and resource(s) 16 are represented as "network element(s)"

The customer requesting a slice in Figure 10 behaves as follows:
1. Determine whether there's a need for trusted computing for a particular slice. For instance, the sensitive nature of the customer's application may require it.
2. If there is no need for trusted computing, continue making a request as it otherwise would, and abort this process.
3. Otherwise then there is a need for trusted computing. Determine what CPU manufacturers are trusted, and what software vendors or specific software versions are trusted.
4. Request a slice by creating a description of the desired connectivity or functionality, embed the trusted computing parameters determined in Steps 1 and 2 as part of the description, and send the description to the orchestrator.
5. If the orchestrator responds that it has created a slice for the customer, and if trusted computing was required, check that the orchestrator's attestation is valid.
6. Similarly, check that the attestations the orchestrator has returned for each participating network element are valid.
7. If any of the attestations are missing or invalid, abort and declare that the request for a slice could not be satisfied.
8. Otherwise, take the slice into use.

The orchestrator in Figure 10 behaves as follows:
1. Receive a request for a slice from a customer. This request may include an embedded request for trusted computing, as well as associated trusted CPU manufacturers, software manufacturers, and/or specific trusted software versions.
2. If there is an embedded request for trusted computing, proceed from Step 3, otherwise continue with what the orchestrator would normally do.
3. If the orchestrator is unable to run in trusted enclave, signal an error and abort the process.
4. Determine what network elements are needed to realize the requested slice such that each network element is capable of satisfying the requested trusted computing requirements.
5. If no set of network elements can be found that satisfies the requirements, signal an error and abort the process.
6. Set up the network elements to provide the slice as specified in the slice request received in Step 1.
7. For each network element, if trusted computing is required for the role of the network element in the slice, request the network element to provide an attestation. Supply the necessary parameters along this request, so that the network element can comply to the customer requirements received in Step 1.
8. Provide an attestation from the orchestrator to the customer.
9. Provide a list of network elements involved in supporting the slice, and their role, and whether trusted computing is or is not required to perform their role.
10. Provide the attestations to the customer from the network element attestations collected earlier.

In Figure 10, the orchestrator returns the attestations of itself and all needed computing elements. But, in another embodiment, the orchestrator returns merely its own attestation, which shows that (given the software it runs), it has required the same attestations from all the relevant network elements. This may be referred to as delegated attestation checking.

In another alternative embodiment, there is a binding between requiring an attestation from a network element and whether that network element processes unencrypted data. For instance, a VPN gateway that decrypts packets before sending them further onwards to other encrypted tunnels is a network element that sees cleartext traffic. However, a router or switch that forwards the encrypted tunnel packets does not. So, one could imagine that the orchestrator only requires an attestation from those network elements that actually see the cleartext traffic.

Some embodiments herein may be applicable to standards specified by the IETF TEAS working group for transport slices, which will include both the concepts (such as specific requested characteristics of a slice) and the concrete north and south-bound interfaces that have to communicate the concepts in concrete way (such as expressing a bandwidth or trusted computing requirement). Some embodiments may for instance incorporate into such standards:
- requesting trusted computing. This may be specified, for instance, via a YANG data model in the north-bound interface between the customer or higher-level orchestrator and the transport slice orchestrator (the TSC).
- A way to express the same in the south-bound interface between the orchestrator and the network elements or lower-level orchestrators.

These extensions are specific to the IETF work that is focused on bit transport. At the level of end-to-end slices, similar extensions and developments may be needed in 3GPP.

Generally, then, according to some embodiments, an orchestrator is given a request from a customer entity to set up a service (e.g., a private communications mechanism between endpoints). The customer entity specifies trusted computing requirements for the orchestrator 18 and the service it sets up. The orchestrator 18 finds suitable network elements that are needed to setup the service, with both the orchestrator and the network elements providing trusted computing attestations about the hardware and software they run. In some embodiments, the orchestrator 18 relays these attestations back to the customer entity.

Some embodiments thereby make it possible to request a trusted computing -based service, e.g., network slice. This allows a more trustworthy service, e.g., more trustworthy processing of traffic in a slice.

Alternatively or additionally, some embodiments make it possible to not merely have to trust/check one entity (such as the orchestrator), but also be able to check that other network elements enrolled into helping the single entity are actually trustworthy:
- An attestation from the orchestrator ensures that it is actually running software that the customer trusts, and that no outside manipulation of the orchestrator's actions are possible because the trusted computing hardware protects the execution of the software. As a result, the customer can be assured that the orchestrator has told the customer about all the network elements that are involved in the slice that the customer has requested.
- Attestations from the involved network elements ensure that they are actually running software that the customer trusts, and again that no outside manipulation is possible. As a result, the customer can be assured that the network elements are actually performing what was requested, and not, for instance, sending cleartext traffic from the VPN to some outside entity.

Some embodiments for example make it possible to express requirements such as "I only want to include Ericsson-approved software in this slice" or "I only approve this software version of a Linux router" or "I only trust AMD CPUs for this communication network".

Some embodiments further make it possible to express requirements such as "every network element that sees the cleartext form of my traffic needs to run Intel SGX and software approved by Ericsson", and have the system automatically arrange that, along with providing proof to the customer that this is indeed what was done.

This is in contrast to current practices where requirements can be expressed in commercial agreements, but they cannot be technically endorsed, and no proof can be provided. While commercial agreements can and should of course be respected, it is a much stronger capability to be able to show with cryptography and trusted computing mechanisms that what was requested is indeed being provided.

Note that embodiments herein may be applicable to orchestration in the context of cloud computing, Software Defined Networking (SDN), Network Function Virtualization (NFV), or the like. Moreover, the embodiments herein are applicable to any type of reference architectural framework. Example architectural frameworks include, for example, an ETSI NFV-Management and Orchestration (MANO) framework and an Open Networking Automation Platform (ONAP) framework.

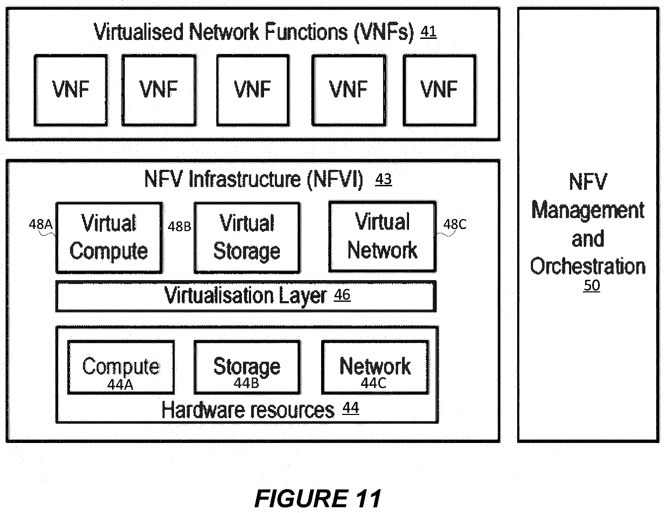

Figure 11 illustrate additional details of one context for some embodiments in which orchestration is performed as part of NFV. As shown in Figure 11, VNFs 41 are virtual implementations of one or more network functions (NFs) capable of running over NFV infrastructure (NFVI) 43. The NFVI 43 includes a range of physical/hardware resources 44 (e.g., hardware computer resource(s) 44A, hardware storage resource(s) 44B, and hardware network resource(s) 44C) as well as their virtualizations via a virtualization layer 46 into virtual computer resource(s) 48A, virtual storage resource(s) 48B, and virtual network resource(s) 48C. Any of these resources may be an example of a resource 16 herein. The NFVI 43 in this way supports the execution of the VNFs 41. NFV Management and Orchestration 50 covers the orchestration and lifecycle management of physical and/or virtual resources that support the infrastructure virtualization, and the lifecycle management of VNFs. NFV Management and Orchestration 50 focuses on all virtualization-specific management tasks necessary in the NFV framework. In this context, an orchestrator 18 from Figure 1 herein comprises or is a part of the NFV Management and Orchestration 50.

The NFV framework enables dynamic construction of management of VNF instances and the relationships between them regarding data, control, management, dependencies, and other attributes. The NFV framework thus provides the capability to load, execute, and move VNFs across different but standardized NFVI point of presence multi-vendor environments.

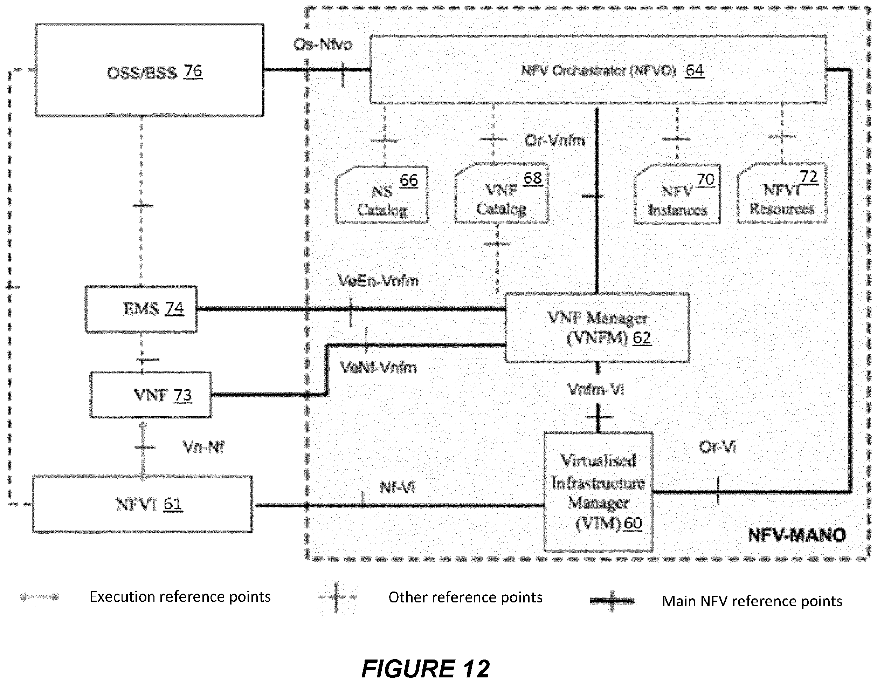

Figure 12 illustrates additional details of some embodiments where the NFV framework corresponds to the NFV Management and Orchestration (MANO) architecture standardized by the European Telecommunications Standards Institute Industry Specification Group (ETSI ISG). As shown, the NFV-MANO includes one or more Virtualized Infrastructure Managers (VIMs) 60 that are each responsible for managing resources of one NFVI 61 domain. Its operations include keeping an inventory of the allocation of virtual resources to physical resources, in order to orchestrate the allocation, upgrade, release, and reclamation of NFVI resources and optimize their use. The VIM 64 also supports management of VNF forwarding graphs by organizing virtual links, networks, subnets, and ports. The VIM 64 furthermore manages a repository of NFVI hardware resources and software resources, along with the discovery of capabilities and features to optimize the use of such resources.

The NFV-MANO also includes a VNF Manager (VNFM) 62 that oversees the lifecycle management of VNF instances. The VNFM 62 for example is responsible for instantiation of VNFs, scaling of VNFs, updating and/or upgrading VNFs, and termination of VNFs. All VNFs are assumed to have an associated VNF manager. The

The NFV-MANO further includes an NFV orchestrator (NFVO) 64 responsible for on-boarding of new network services and VNF packages, NFV lifecycle management, global resource management, validation and authorization of NFVI resource requests. The NFVO 64 has the ability to coordinate, authorize, release, and engage NFVI resources independently of any specific VIM 60. It also provides governance of VNF instances sharing resources of the NFVI 61. To provide service orchestration, the NFVO 64 creates end-to-end services among different VNFs, that may be managed by different VNFMs with which the NFVO coordinates. Within this framework, an orchestrator 18 from Figure 1 herein may correspond to the NFVO 64 for a domain.

The NFVO 64 performs this role with the help of a network service (NS) catalog 66, a VNF catalog 68, a list of NFV instances 70, and a list of NFVI resources 72. The VNF catalog 68 is a repository of all usable VNF descriptors, where a VNF descriptor (VNFD) is a deployable template which describes a VNF in terms of its deployment and operational behavior requirements. It is primarily used by the VNFM 62 in the process of VNF instantiation and lifecycle management of a VNF instance. The information provided in the VNFD is also used by the NFVO to manage and orchestrate network services and virtualized resources on the NFVI 61. For VNFs that correspond to a service, then, the VNF catalog 68 includes service templates (e.g., in the form the VNF descriptors).

The NS catalog 66 is a catalog of usable network services. The NS catalog 66 includes a deployment template for a network service in terms of VNFs and a description of their connectivity through virtual links. The NS catalog 66 includes service templates (e.g., in the form of network service descriptors) for those respective services. As an example, a top-level service template may be a network service descriptor containing (abstract) VNF and/or PNF node templates, and each VNF or PNF node template can be substituted by a corresponding detailed VNF or PNF descriptor, i.e., a low-level service template.

The list of NFV instances 70 holds all details about network services instances and related VNF instances. And the NFVI resources 72 is a repository of NFVI resources utilized for the purpose of establishing NFV services. In this context, a resource 16 herein may be exemplified as an NFVI resource 72 or an NFV instance 70.

Also shown in Figure 12 for completeness, an element management system (EMS) 74 is responsible for fault, configuration, accounting, performance, and security management for the functional part of the VNF 73. And the operational support system (OSS) / business support system (BSS) 76 includes a collection of systems and applications that a service provider uses to operate its business. NFV works in coordination with the OSS/BSS 76.

Moreover, although exemplified with respect to customer premises equipment 12, embodiments herein may be exploited by any equipment configured to request orchestration of a service. This is the case whether or not the equipment is located at the customer premises or controlled by the customer, and whether or not the service requested is a service is for the benefit of or to be consumed by the equipment itself. For example, in some embodiments, one orchestrator may delegate orchestration of a service to another orchestrator, such that the orchestration request from one orchestrator to another orchestrator may include a trusted computing policy 32.

Note further that a resource 16 herein may refer to any type of resource on which a service 10 may be established. A resource 16 may for example refer to infrastructure, a network entity, a network function, a network service, or the like, whether physical or virtual. In physical form, the resource may be or be included in resource equipment. In virtual or software form, the resource may be hosted on resource equipment.

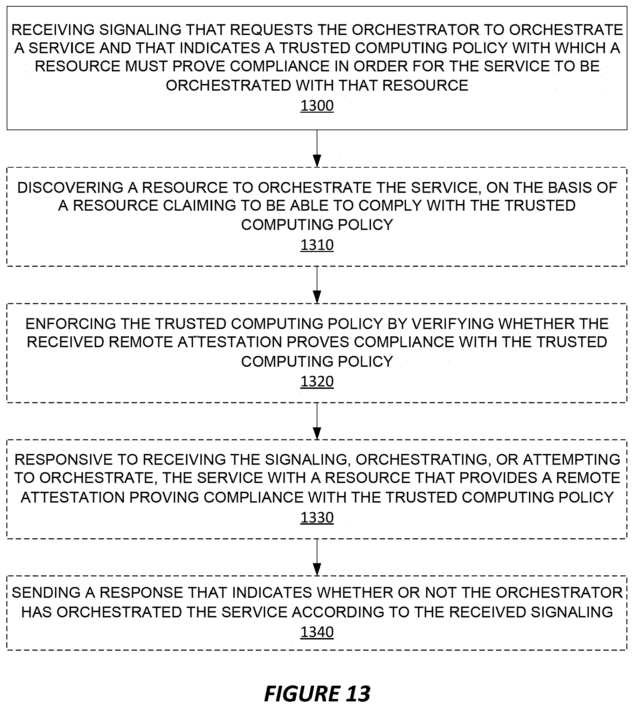

In view of the above modifications and variations, Figure 13 depicts a method performed by an orchestrator 18 in accordance with particular embodiments. The method includes receiving signaling 20 that requests the orchestrator 18 to orchestrate a service 10 and that indicates a trusted computing policy 32 with which a resource 16 must prove compliance in order for the service 10 to be orchestrated with that resource 16 (Block 1300).

In some embodiments, the method comprises discovering a resource 16 to orchestrate the service 10, on the basis of a resource 16 claiming to be able to comply with the trusted computing policy 32 (Block 1310).

In some embodiments, the method alternatively or additionally comprises, enforcing the trusted computing policy 32 by verifying whether a received remote attestation 34 proves compliance with the trusted computing policy 32 (Block 1320).

In some embodiments, the method alternatively or additionally comprises, responsive to receiving the signaling 20, orchestrating, or attempting to orchestrate, the service 10 with a resource 16 that provides a remote attestation 36 proving compliance with the trusted computing policy 32 (Block 1330).

In some embodiments, the method comprises sending a response 30 that indicates whether or not the orchestrator 18 has orchestrated the service 10 according to the received signaling 20 (Block 1340).

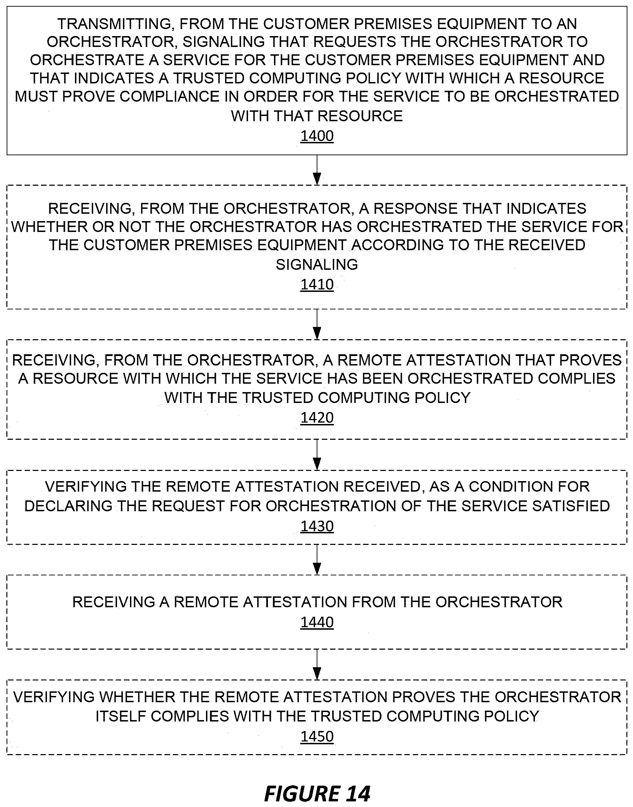

Figure 14 depicts a method performed by customer premises equipment 12 in accordance with other particular embodiments. The method includes transmitting, from the customer premises equipment 12 to an orchestrator 18, signaling 20 that requests the orchestrator 18 to orchestrate a service 10 for the customer premises equipment 12 and that indicates a trusted computing policy 32 with which a resource 16 must prove compliance in order for the service 10 to be orchestrated with that resource 16 (Block 1400).

In some embodiments, the method further comprises receiving, from the orchestrator 18, a response 30 that indicates whether or not the orchestrator 18 has orchestrated the service 10 for the customer premises equipment 12 according to the signaling 20 (Block 1410).

In some embodiments, the method comprises receiving, from the orchestrator 18, a remote attestation 36 that proves a resource 16 with which the service 10 has been orchestrated complies with the trusted computing policy 32 (Block 1420). In one such embodiment, the method may further comprise verifying the remote attestation 36 received, as a condition for declaring the request 22 for orchestration of the service 10 satisfied (Block 1430).

In some embodiments, the method alternatively or additionally comprises receiving a remote attestation 36 from the orchestrator (Block 1440). In one such embodiment, the method further comprises verifying whether the remote attestation 36 proves the orchestrator 18 itself complies with the trusted computing policy 32 (Block 1450).

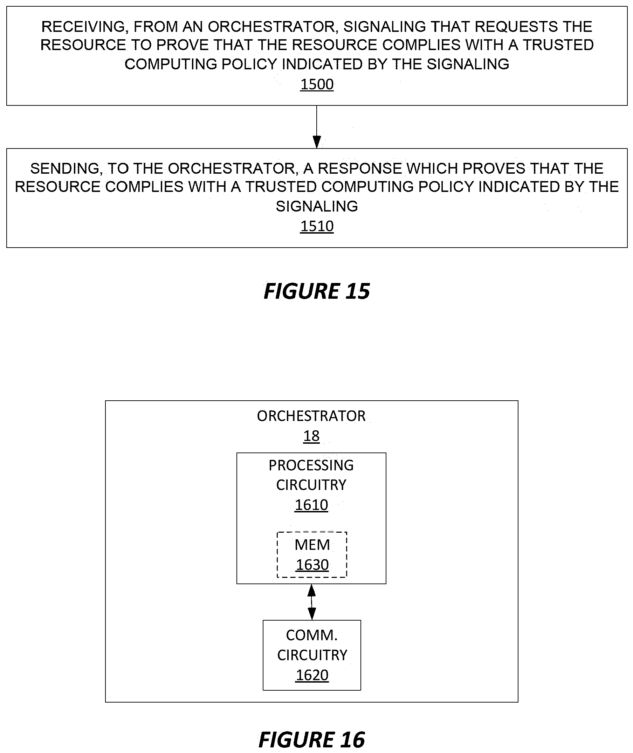

Figure 15 depicts a method performed by resource equipment configured to be or host a resource 16 in accordance with other particular embodiments. The method comprises receiving, from an orchestrator 18, signaling 24 that requests the resource 16 to prove that the resource 16 complies with a trusted computing policy 32 indicated by the signaling 24 (Block 1500). The method may further comprise sending, to the orchestrator 18, a response 28 which proves that the resource 16 complies with a trusted computing policy 32 indicated by the signaling 24 (Block 1510).

Embodiments herein also include corresponding apparatuses. Embodiments herein for instance include an orchestrator 16 configured to perform any of the steps of any of the embodiments described above for the orchestrator 16.

Embodiments also include an orchestrator 16 comprising processing circuitry and power supply circuitry. The processing circuitry is configured to perform any of the steps of any of the embodiments described above for the orchestrator 16. The power supply circuitry is configured to supply power to the orchestrator 16.

Embodiments further include an orchestrator 16 comprising processing circuitry. The processing circuitry is configured to perform any of the steps of any of the embodiments described above for the orchestrator 16. In some embodiments, the orchestrator 16 further comprises communication circuitry.

Embodiments further include an orchestrator 16 comprising processing circuitry and memory. The memory contains instructions executable by the processing circuitry whereby the orchestrator 16 is configured to perform any of the steps of any of the embodiments described above for the orchestrator 16.

Embodiments herein also include customer premises equipment 12 configured to perform any of the steps of any of the embodiments described above for the customer premises equipment 12.

Embodiments also include customer premises equipment 12 comprising processing circuitry and power supply circuitry. The processing circuitry is configured to perform any of the steps of any of the embodiments described above for the customer premises equipment 12. The power supply circuitry is configured to supply power to the customer premises equipment 12.

Embodiments further include customer premises equipment 12 comprising processing circuitry. The processing circuitry is configured to perform any of the steps of any of the embodiments described above for the customer premises equipment 12. In some embodiments, the customer premises equipment 12 further comprises communication circuitry.

Embodiments further include customer premises equipment 12 comprising processing circuitry and memory. The memory contains instructions executable by the processing circuitry whereby the customer premises equipment 12 is configured to perform any of the steps of any of the embodiments described above for the customer premises equipment 12.

Embodiments herein also include resource equipment configured to be or host a resource 16 for providing at least a part of a service 10. The resource equipment may be configured to perform any of the steps of any of the embodiments described above in association with a resource 16.

Embodiments herein also include resource equipment configured to be or host a resource 16 for providing at least a part of a service 10. The resource equipment may comprise processing circuitry and power supply circuitry. The processing circuitry is configured to perform any of the steps of any of the embodiments described above in association with a resource 16. The power supply circuitry is configured to supply power to the resource equipment.

Embodiments herein also include resource equipment configured to be or host a resource 16 for providing at least a part of a service 10. The resource equipment may comprise processing circuitry. The processing circuitry is configured to perform any of the steps of any of the embodiments described above in association with a resource 16. In some embodiments, the resource equipment further comprises communication circuitry.

Embodiments herein also include resource equipment configured to be or host a resource 16 for providing at least a part of a service 10. The resource equipment may comprise processing circuitry and memory. The memory contains instructions executable by the processing circuitry whereby the resource equipment is configured to perform any of the steps of any of the embodiments described above in association with a resource 16.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

Figure 16 for example illustrates an orchestrator 18 as implemented in accordance with one or more embodiments. As shown, the orchestrator 18 includes processing circuitry 1610 and communication circuitry 1620. The communication circuitry 1620 is configured to transmit and/or receive information to and/or from one or more other nodes, such as consumer premises equipment 12 and/or a resource 16. The processing circuitry 1610 is configured to perform processing described above, e.g., in Figure 13, such as by executing instructions stored in memory 1630. The processing circuitry 1610 in this regard may implement certain functional means, units, or modules.

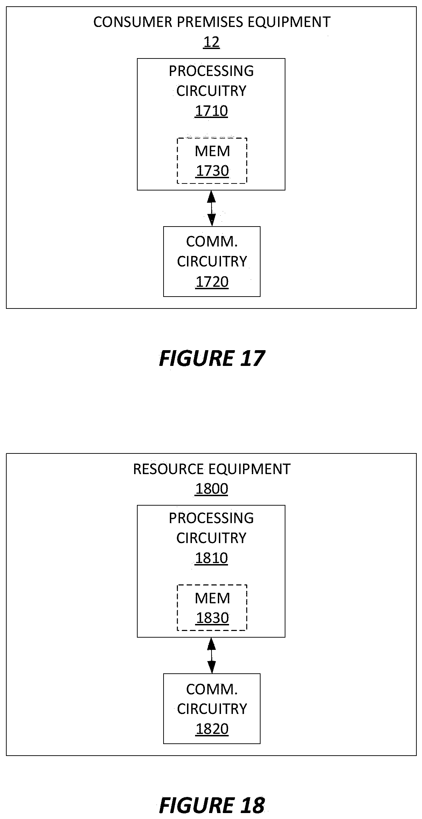

Figure 17 illustrates consumer premises equipment 12 as implemented in accordance with one or more embodiments. As shown, the consumer premises equipment 12 includes processing circuitry 1710 and communication circuitry 1720. The communication circuitry 1720 is configured to transmit and/or receive information to and/or from one or more other nodes, e.g., the orchestrator 18 and/or a resource 16. The processing circuitry 1710 is configured to perform processing described above, e.g., in Figure 14, such as by executing instructions stored in memory 1730. The processing circuitry 1710 in this regard may implement certain functional means, units, or modules.

Figure 18 illustrates resource equipment 1800 configured to be or host a resource 16, as implemented in accordance with one or more embodiments. As shown, the resource equipment 1800 includes processing circuitry 1810 and communication circuitry 1820. The communication circuitry 1820 is configured to transmit and/or receive information to and/or from one or more other nodes, e.g., the orchestrator 18 and/or consumer premises equipment 12 The processing circuitry 1810 is configured to perform processing described above, e.g., in Figure 15, such as by executing instructions stored in memory 1830. The processing circuitry 1810 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

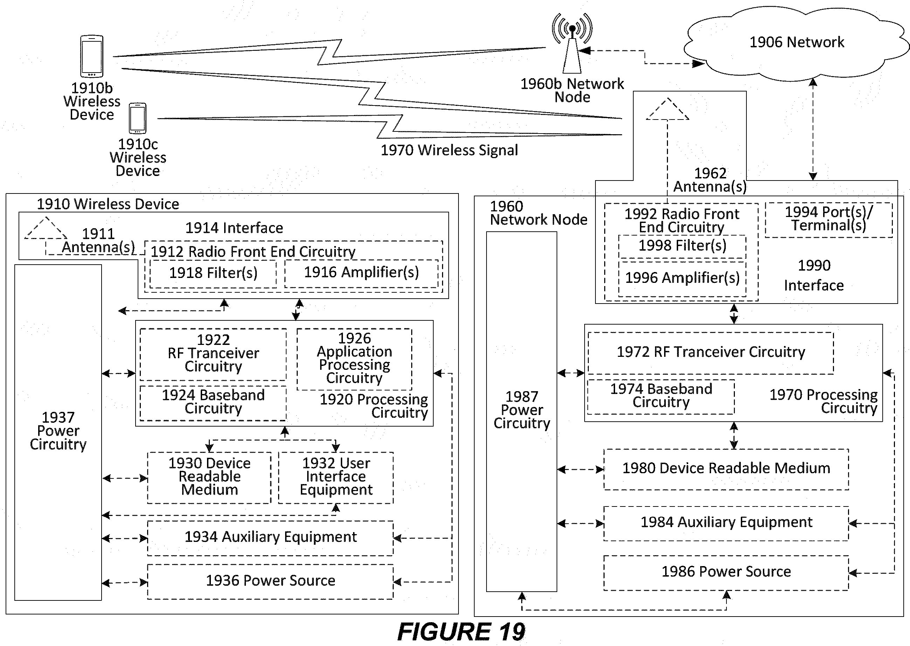

Although the subject matter described herein may be implemented in any appropriate type of system using any suitable components, some embodiments disclosed herein are described in relation to a wireless network, such as the example wireless network illustrated in Figure 19. For simplicity, the wireless network of Figure 19 only depicts network 1906, network nodes 1960 and 1960b, and WDs 1910, 1910b, and 1910c. In practice, a wireless network may further include any additional elements suitable to support communication between wireless devices or between a wireless device and another communication device, such as a landline telephone, a service provider, or any other network node or end device. Of the illustrated components, network node 1960 and wireless device (WD) 1910 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-loT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1906 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1960 and WD 1910 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 19, network node 1960 includes processing circuitry 1970, device readable medium 1980, interface 1990, auxiliary equipment 1984, power source 1986, power circuitry 1987, and antenna 1962. Although network node 1960 illustrated in the example wireless network of Figure 19 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1960 are depicted as single boxes located within a larger box, or nested within multiple boxes, in practice, a network node may comprise multiple different physical components that make up a single illustrated component (e.g., device readable medium 1980 may comprise multiple separate hard drives as well as multiple RAM modules).

Similarly, network node 1960 may be composed of multiple physically separate components (e.g., a NodeB component and a RNC component, or a BTS component and a BSC component, etc.), which may each have their own respective components. In certain scenarios in which network node 1960 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1960 may be configured to support multiple radio access technologies (RATs). In such embodiments, some components may be duplicated (e.g., separate device readable medium 1980 for the different RATs) and some components may be reused (e.g., the same antenna 1962 may be shared by the RATs). Network node 1960 may also include multiple sets of the various illustrated components for different wireless technologies integrated into network node 1960, such as, for example, GSM, WCDMA, LTE, NR, WiFi, or Bluetooth wireless technologies. These wireless technologies may be integrated into the same or different chip or set of chips and other components within network node 1960.

Processing circuitry 1970 is configured to perform any determining, calculating, or similar operations (e.g., certain obtaining operations) described herein as being provided by a network node. These operations performed by processing circuitry 1970 may include processing information obtained by processing circuitry 1970 by, for example, converting the obtained information into other information, comparing the obtained information or converted information to information stored in the network node, and/or performing one or more operations based on the obtained information or converted information, and as a result of said processing making a determination.

Processing circuitry 1970 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1960 components, such as device readable medium 1980, network node 1960 functionality. For example, processing circuitry 1970 may execute instructions stored in device readable medium 1980 or in memory within processing circuitry 1970. Such functionality may include providing any of the various wireless features, functions, or benefits discussed herein. In some embodiments, processing circuitry 1970 may include a system on a chip (SOC).

In some embodiments, processing circuitry 1970 may include one or more of radio frequency (RF) transceiver circuitry 1972 and baseband processing circuitry 1974. In some embodiments, radio frequency (RF) transceiver circuitry 1972 and baseband processing circuitry 1974 may be on separate chips (or sets of chips), boards, or units, such as radio units and digital units. In alternative embodiments, part or all of RF transceiver circuitry 1972 and baseband processing circuitry 1974 may be on the same chip or set of chips, boards, or units

In certain embodiments, some or all of the functionality described herein as being provided by a network node, base station, eNB or other such network device may be performed by processing circuitry 1970 executing instructions stored on device readable medium 1980 or memory within processing circuitry 1970. In alternative embodiments, some or all of the functionality may be provided by processing circuitry 1970 without executing instructions stored on a separate or discrete device readable medium, such as in a hard-wired manner. In any of those embodiments, whether executing instructions stored on a device readable storage medium or not, processing circuitry 1970 can be configured to perform the described functionality. The benefits provided by such functionality are not limited to processing circuitry 1970 alone or to other components of network node 1960, but are enjoyed by network node 1960 as a whole, and/or by end users and the wireless network generally.

Device readable medium 1980 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1970. Device readable medium 1980 may store any suitable instructions, data or information, including a computer program, software, an application including one or more of logic, rules, code, tables, etc. and/or other instructions capable of being executed by processing circuitry 1970 and, utilized by network node 1960. Device readable medium 1980 may be used to store any calculations made by processing circuitry 1970 and/or any data received via interface 1990. In some embodiments, processing circuitry 1970 and device readable medium 1980 may be considered to be integrated.

Interface 1990 is used in the wired or wireless communication of signalling and/or data between network node 1960, network 1906, and/or WDs 1910. As illustrated, interface 1990 comprises port(s)/terminal(s) 1994 to send and receive data, for example to and from network 1906 over a wired connection. Interface 1990 also includes radio front end circuitry 1992 that may be coupled to, or in certain embodiments a part of, antenna 1962. Radio front end circuitry 1992 comprises filters 1998 and amplifiers 1996. Radio front end circuitry 1992 may be connected to antenna 1962 and processing circuitry 1970. Radio front end circuitry may be configured to condition signals communicated between antenna 1962 and processing circuitry 1970. Radio front end circuitry 1992 may receive digital data that is to be sent out to other network nodes or WDs via a wireless connection. Radio front end circuitry 1992 may convert the digital data into a radio signal having the appropriate channel and bandwidth parameters using a combination of filters 1998 and/or amplifiers 1996. The radio signal may then be transmitted via antenna 1962. Similarly, when receiving data, antenna 1962 may collect radio signals which are then converted into digital data by radio front end circuitry 1992. The digital data may be passed to processing circuitry 1970. In other embodiments, the interface may comprise different components and/or different combinations of components.

In certain alternative embodiments, network node 1960 may not include separate radio front end circuitry 1992, instead, processing circuitry 1970 may comprise radio front end circuitry and may be connected to antenna 1962 without separate radio front end circuitry 1992. Similarly, in some embodiments, all or some of RF transceiver circuitry 1972 may be considered a part of interface 1990. In still other embodiments, interface 1990 may include one or more ports or terminals 1994, radio front end circuitry 1992, and RF transceiver circuitry 1972, as part of a radio unit (not shown), and interface 1990 may communicate with baseband processing circuitry 1974, which is part of a digital unit (not shown).

Antenna 1962 may include one or more antennas, or antenna arrays, configured to send and/or receive wireless signals. Antenna 1962 may be coupled to radio front end circuitry 1990 and may be any type of antenna capable of transmitting and receiving data and/or signals wirelessly. In some embodiments, antenna 1962 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1962 may be separate from network node 1960 and may be connectable to network node 1960 through an interface or port.

Antenna 1962, interface 1990, and/or processing circuitry 1970 may be configured to perform any receiving operations and/or certain obtaining operations described herein as being performed by a network node. Any information, data and/or signals may be received from a wireless device, another network node and/or any other network equipment. Similarly, antenna 1962, interface 1990, and/or processing circuitry 1970 may be configured to perform any transmitting operations described herein as being performed by a network node. Any information, data and/or signals may be transmitted to a wireless device, another network node and/or any other network equipment.

Power circuitry 1987 may comprise, or be coupled to, power management circuitry and is configured to supply the components of network node 1960 with power for performing the functionality described herein. Power circuitry 1987 may receive power from power source 1986. Power source 1986 and/or power circuitry 1987 may be configured to provide power to the various components of network node 1960 in a form suitable for the respective components (e.g., at a voltage and current level needed for each respective component). Power source 1986 may either be included in, or external to, power circuitry 1987 and/or network node 1960. For example, network node 1960 may be connectable to an external power source (e.g., an electricity outlet) via an input circuitry or interface such as an electrical cable, whereby the external power source supplies power to power circuitry 1987. As a further example, power source 1986 may comprise a source of power in the form of a battery or battery pack which is connected to, or integrated in, power circuitry 1987. The battery may provide backup power should the external power source fail. Other types of power sources, such as photovoltaic devices, may also be used.

Alternative embodiments of network node 1960 may include additional components beyond those shown in Figure 19 that may be responsible for providing certain aspects of the network node's functionality, including any of the functionality described herein and/or any functionality necessary to support the subject matter described herein. For example, network node 1960 may include user interface equipment to allow input of information into network node 1960 and to allow output of information from network node 1960. This may allow a user to perform diagnostic, maintenance, repair, and other administrative functions for network node 1960.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1910 includes antenna 1911, interface 1914, processing circuitry 1920, device readable medium 1930, user interface equipment 1932, auxiliary equipment 1934, power source 1936 and power circuitry 1937. WD 1910 may include multiple sets of one or more of the illustrated components for different wireless technologies supported by WD 1910, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 1910.

Antenna 1911 may include one or more antennas or antenna arrays, configured to send and/or receive wireless signals, and is connected to interface 1914. In certain alternative embodiments, antenna 1911 may be separate from WD 1910 and be connectable to WD 1910 through an interface or port. Antenna 1911, interface 1914, and/or processing circuitry 1920 may be configured to perform any receiving or transmitting operations described herein as being performed by a WD. Any information, data and/or signals may be received from a network node and/or another WD. In some embodiments, radio front end circuitry and/or antenna 1911 may be considered an interface.

As illustrated, interface 1914 comprises radio front end circuitry 1912 and antenna 1911. Radio front end circuitry 1912 comprise one or more filters 1918 and amplifiers 1916. Radio front end circuitry 1914 is connected to antenna 1911 and processing circuitry 1920, and is configured to condition signals communicated between antenna 1911 and processing circuitry 1920. Radio front end circuitry 1912 may be coupled to or a part of antenna 1911. In some embodiments, WD 1910 may not include separate radio front end circuitry 1912; rather, processing circuitry 1920 may comprise radio front end circuitry and may be connected to antenna 1911. Similarly, in some embodiments, some or all of RF transceiver circuitry 1922 may be considered a part of interface 1914. Radio front end circuitry 1912 may receive digital data that is to be sent out to other network nodes or WDs via a wireless connection. Radio front end circuitry 1912 may convert the digital data into a radio signal having the appropriate channel and bandwidth parameters using a combination of filters 1918 and/or amplifiers 1916. The radio signal may then be transmitted via antenna 1911. Similarly, when receiving data, antenna 1911 may collect radio signals which are then converted into digital data by radio front end circuitry 1912. The digital data may be passed to processing circuitry 1920. In other embodiments, the interface may comprise different components and/or different combinations of components.

Processing circuitry 1920 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1910 components, such as device readable medium 1930, WD 1910 functionality. Such functionality may include providing any of the various wireless features or benefits discussed herein. For example, processing circuitry 1920 may execute instructions stored in device readable medium 1930 or in memory within processing circuitry 1920 to provide the functionality disclosed herein.

As illustrated, processing circuitry 1920 includes one or more of RF transceiver circuitry 1922, baseband processing circuitry 1924, and application processing circuitry 1926. In other embodiments, the processing circuitry may comprise different components and/or different combinations of components. In certain embodiments processing circuitry 1920 of WD 1910 may comprise a SOC. In some embodiments, RF transceiver circuitry 1922, baseband processing circuitry 1924, and application processing circuitry 1926 may be on separate chips or sets of chips. In alternative embodiments, part or all of baseband processing circuitry 1924 and application processing circuitry 1926 may be combined into one chip or set of chips, and RF transceiver circuitry 1922 may be on a separate chip or set of chips. In still alternative embodiments, part or all of RF transceiver circuitry 1922 and baseband processing circuitry 1924 may be on the same chip or set of chips, and application processing circuitry 1926 may be on a separate chip or set of chips. In yet other alternative embodiments, part or all of RF transceiver circuitry 1922, baseband processing circuitry 1924, and application processing circuitry 1926 may be combined in the same chip or set of chips. In some embodiments, RF transceiver circuitry 1922 may be a part of interface 1914. RF transceiver circuitry 1922 may condition RF signals for processing circuitry 1920.

In certain embodiments, some or all of the functionality described herein as being performed by a WD may be provided by processing circuitry 1920 executing instructions stored on device readable medium 1930, which in certain embodiments may be a computer-readable storage medium. In alternative embodiments, some or all of the functionality may be provided by processing circuitry 1920 without executing instructions stored on a separate or discrete device readable storage medium, such as in a hard-wired manner. In any of those particular embodiments, whether executing instructions stored on a device readable storage medium or not, processing circuitry 1920 can be configured to perform the described functionality. The benefits provided by such functionality are not limited to processing circuitry 1920 alone or to other components of WD 1910, but are enjoyed by WD 1910 as a whole, and/or by end users and the wireless network generally.

Processing circuitry 1920 may be configured to perform any determining, calculating, or similar operations (e.g., certain obtaining operations) described herein as being performed by a WD. These operations, as performed by processing circuitry 1920, may include processing information obtained by processing circuitry 1920 by, for example, converting the obtained information into other information, comparing the obtained information or converted information to information stored by WD 1910, and/or performing one or more operations based on the obtained information or converted information, and as a result of said processing making a determination.

Device readable medium 1930 may be operable to store a computer program, software, an application including one or more of logic, rules, code, tables, etc. and/or other instructions capable of being executed by processing circuitry 1920. Device readable medium 1930 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1920. In some embodiments, processing circuitry 1920 and device readable medium 1930 may be considered to be integrated.

User interface equipment 1932 may provide components that allow for a human user to interact with WD 1910. Such interaction may be of many forms, such as visual, audial, tactile, etc. User interface equipment 1932 may be operable to produce output to the user and to allow the user to provide input to WD 1910. The type of interaction may vary depending on the type of user interface equipment 1932 installed in WD 1910. For example, if WD 1910 is a smart phone, the interaction may be via a touch screen; if WD 1910 is a smart meter, the interaction may be through a screen that provides usage (e.g., the number of gallons used) or a speaker that provides an audible alert (e.g., if smoke is detected). User interface equipment 1932 may include input interfaces, devices and circuits, and output interfaces, devices and circuits. User interface equipment 1932 is configured to allow input of information into WD 1910, and is connected to processing circuitry 1920 to allow processing circuitry 1920 to process the input information. User interface equipment 1932 may include, for example, a microphone, a proximity or other sensor, keys/buttons, a touch display, one or more cameras, a USB port, or other input circuitry. User interface equipment 1932 is also configured to allow output of information from WD 1910, and to allow processing circuitry 1920 to output information from WD 1910. User interface equipment 1932 may include, for example, a speaker, a display, vibrating circuitry, a USB port, a headphone interface, or other output circuitry. Using one or more input and output interfaces, devices, and circuits, of user interface equipment 1932, WD 1910 may communicate with end users and/or the wireless network, and allow them to benefit from the functionality described herein.

Auxiliary equipment 1934 is operable to provide more specific functionality which may not be generally performed by WDs. This may comprise specialized sensors for doing measurements for various purposes, interfaces for additional types of communication such as wired communications etc. The inclusion and type of components of auxiliary equipment 1934 may vary depending on the embodiment and/or scenario.

Power source 1936 may, in some embodiments, be in the form of a battery or battery pack. Other types of power sources, such as an external power source (e.g., an electricity outlet), photovoltaic devices or power cells, may also be used. WD 1910 may further comprise power circuitry 1937 for delivering power from power source 1936 to the various parts of WD 1910 which need power from power source 1936 to carry out any functionality described or indicated herein. Power circuitry 1937 may in certain embodiments comprise power management circuitry. Power circuitry 1937 may additionally or alternatively be operable to receive power from an external power source; in which case WD 1910 may be connectable to the external power source (such as an electricity outlet) via input circuitry or an interface such as an electrical power cable. Power circuitry 1937 may also in certain embodiments be operable to deliver power from an external power source to power source 1936. This may be, for example, for the charging of power source 1936. Power circuitry 1937 may perform any formatting, converting, or other modification to the power from power source 1936 to make the power suitable for the respective components of WD 1910 to which power is supplied.

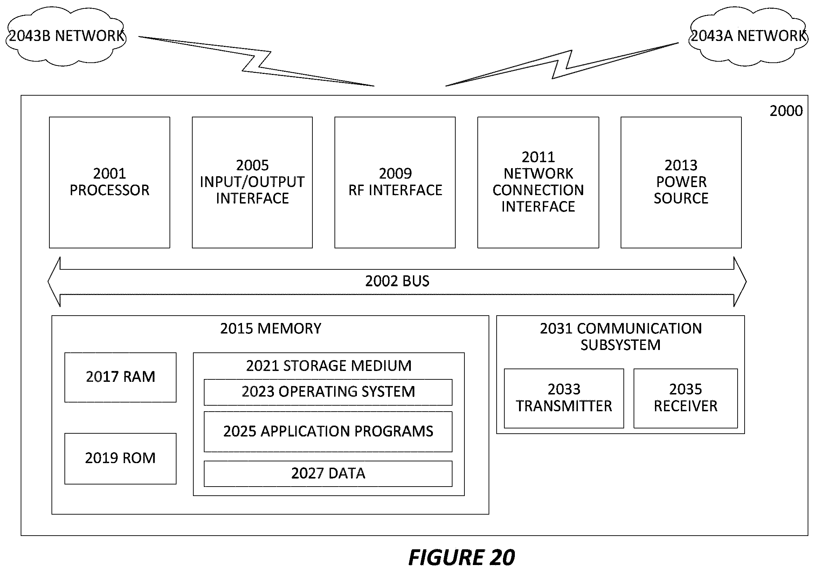

Figure 20 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 20200 may be any UE identified by the 3^{rd} Generation Partnership Project (3GPP), including a NB-loT UE, a machine type communication (MTC) UE, and/or an enhanced MTC (eMTC) UE. UE 2000, as illustrated in Figure 20, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 20 is a UE, the components discussed herein are equally applicable to a WD, and vice-versa.

In Figure 20, UE 2000 includes processing circuitry 2001 that is operatively coupled to input/output interface 2005, radio frequency (RF) interface 2009, network connection interface 2011, memory 2015 including random access memory (RAM) 2017, read-only memory (ROM) 2019, and storage medium 2021 or the like, communication subsystem 2031, power source 2033, and/or any other component, or any combination thereof. Storage medium 2021 includes operating system 2023, application program 2025, and data 2027. In other embodiments, storage medium 2021 may include other similar types of information. Certain UEs may utilize all of the components shown in Figure 20, or only a subset of the components. The level of integration between the components may vary from one UE to another UE. Further, certain UEs may contain multiple instances of a component, such as multiple processors, memories, transceivers, transmitters, receivers, etc.

In Figure 20, processing circuitry 2001 may be configured to process computer instructions and data. Processing circuitry 2001 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 2001 may include two central processing units (CPUs). Data may be information in a form suitable for use by a computer.

In the depicted embodiment, input/output interface 2005 may be configured to provide a communication interface to an input device, output device, or input and output device. UE 2000 may be configured to use an output device via input/output interface 2005. An output device may use the same type of interface port as an input device. For example, a USB port may be used to provide input to and output from UE 2000. The output device may be a speaker, a sound card, a video card, a display, a monitor, a printer, an actuator, an emitter, a smartcard, another output device, or any combination thereof. UE 2000 may be configured to use an input device via input/output interface 2005 to allow a user to capture information into UE 2000. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 20, RF interface 2009 may be configured to provide a communication interface to RF components such as a transmitter, a receiver, and an antenna. Network connection interface 2011 may be configured to provide a communication interface to network 2043a. Network 2043a may encompass wired and/or wireless networks such as a local-area network (LAN), a wide-area network (WAN), a computer network, a wireless network, a telecommunications network, another like network or any combination thereof. For example, network 2043a may comprise a Wi-Fi network. Network connection interface 2011 may be configured to include a receiver and a transmitter interface used to communicate with one or more other devices over a communication network according to one or more communication protocols, such as Ethernet, TCP/IP, SONET, ATM, or the like. Network connection interface 2011 may implement receiver and transmitter functionality appropriate to the communication network links (e.g., optical, electrical, and the like). The transmitter and receiver functions may share circuit components, software or firmware, or alternatively may be implemented separately.

RAM 2017 may be configured to interface via bus 2002 to processing circuitry 2001 to provide storage or caching of data or computer instructions during the execution of software programs such as the operating system, application programs, and device drivers. ROM 2019 may be configured to provide computer instructions or data to processing circuitry 2001. For example, ROM 2019 may be configured to store invariant low-level system code or data for basic system functions such as basic input and output (I/O), startup, or reception of keystrokes from a keyboard that are stored in a non-volatile memory. Storage medium 2021 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 2021 may be configured to include operating system 2023, application program 2025 such as a web browser application, a widget or gadget engine or another application, and data file 2027. Storage medium 2021 may store, for use by UE 2000, any of a variety of various operating systems or combinations of operating systems.

Storage medium 2021 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 2021 may allow UE 2000 to access computer-executable instructions, application programs or the like, stored on transitory or non-transitory memory media, to off-load data, or to upload data. An article of manufacture, such as one utilizing a communication system may be tangibly embodied in storage medium 2021, which may comprise a device readable medium.

In Figure 20, processing circuitry 2001 may be configured to communicate with network 2043b using communication subsystem 2031. Network 2043a and network 2043b may be the same network or networks or different network or networks. Communication subsystem 2031 may be configured to include one or more transceivers used to communicate with network 2043b. For example, communication subsystem 2031 may be configured to include one or more transceivers used to communicate with one or more remote transceivers of another device capable of wireless communication such as another WD, UE, or base station of a radio access network (RAN) according to one or more communication protocols, such as IEEE 802.20, CDMA, WCDMA, GSM, LTE, UTRAN, WiMax, or the like. Each transceiver may include transmitter 2033 and/or receiver 2035 to implement transmitter or receiver functionality, respectively, appropriate to the RAN links (e.g., frequency allocations and the like). Further, transmitter 2033 and receiver 2035 of each transceiver may share circuit components, software or firmware, or alternatively may be implemented separately.

In the illustrated embodiment, the communication functions of communication subsystem 2031 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 2031 may include cellular communication, Wi-Fi communication, Bluetooth communication, and GPS communication. Network 2043b may encompass wired and/or wireless networks such as a local-area network (LAN), a wide-area network (WAN), a computer network, a wireless network, a telecommunications network, another like network or any combination thereof. For example, network 2043b may be a cellular network, a Wi-Fi network, and/or a near-field network. Power source 2013 may be configured to provide alternating current (AC) or direct current (DC) power to components of UE 2000.

The features, benefits and/or functions described herein may be implemented in one of the components of UE 2000 or partitioned across multiple components of UE 2000. Further, the features, benefits, and/or functions described herein may be implemented in any combination of hardware, software or firmware. In one example, communication subsystem 2031 may be configured to include any of the components described herein. Further, processing circuitry 2001 may be configured to communicate with any of such components over bus 2002. In another example, any of such components may be represented by program instructions stored in memory that when executed by processing circuitry 2001 perform the corresponding functions described herein. In another example, the functionality of any of such components may be partitioned between processing circuitry 2001 and communication subsystem 2031. In another example, the non-computationally intensive functions of any of such components may be implemented in software or firmware and the computationally intensive functions may be implemented in hardware.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

The term "A and/or B" as used herein covers embodiments having A alone, B alone, or both A and B together. The term "A and/or B" may therefore equivalently mean "at least one of any one or more of A and B".

Some of the embodiments contemplated herein are described more fully with reference to the accompanying drawings. Other embodiments, however, are contained within the scope of the subject matter disclosed herein, which is defined by the appended set of claims.

## Claims

1. A method performed by an orchestrator, the method comprising:
receiving signaling (1300), from a customer premises equipment, that requests the orchestrator to orchestrate a service and that indicates a trusted computing policy with which a resource must prove compliance in order for the service to be orchestrated with that resource; and
sending a response (1340), to the customer premises equipment, that indicates whether or not the orchestrator has orchestrated the service according to the received signaling, depending on whether the the resource complies with the trusted computing policy.

2. The method of claim 1, wherein the trusted computing policy specifies a requirement that a resource with which the service is to be orchestrated must have a certain identity, configuration, behavior, or property, wherein the resource must prove compliance with the trusted computing policy by providing a remote attestation which proves the resource has the certain identity, configuration, behavior, or property.

3. The method of any of claim 1 to 2, wherein the trusted computing policy specifies a requirement that a resource with which the service is to be orchestrated must execute a certain software image or version, must execute software provided by a certain software provider, must execute software accredited by a certain software accreditor, must have certain hardware, must have hardware provided by a certain hardware manufacturer, must have hardware accredited by a certain hardware accreditor, or any combination thereof.

4. The method of any of claims 1 to 3, further comprising:
requesting a resource for a remote attestation that claims to prove compliance with the trusted computing policy; and
receiving the requested remote attestation from the resource.

5. The method of claim 4, wherein, based on the orchestrator verifying the received remote attestation, the response includes a remote attestation which proves the orchestrator itself complies with the trusted computing policy and which implicitly indicates a resource with which the service is orchestrated has proven compliance with the trusted computing policy.

6. The method of any of claims 1-5, wherein the signaling indicates one or more conditions under which proving compliance with the trusted computing policy is required of a resource.

7. The method of any of claims 1-6, wherein the signaling also requests that the orchestrator itself prove that the orchestrator complies with the trusted computing policy, and wherein the response includes a remote attestation that proves the orchestrator itself complies with the trusted computing policy.

8. A method performed by customer premises equipment, the method comprising:
transmitting, (1400), from the customer premises equipment to an orchestrator. signaling that requests the orchestrator to orchestrate a service for the customer premises equipment and that indicates a trusted computing policy with which a resource must prove compliance in order for the service to be orchestrated with that resource; and
receiving, (1410), from the orchestrator, a response that indicates whether or not the orchestrator has orchestrated the service for the customer premises equipment according to the signaling, depending on whether the the resource complies with the trusted computing policy.

9. The method of claim 8, wherein the trusted computing policy specifies a requirement that a resource with which the service is to be orchestrated must have a certain identity, configuration, behavior, or property, wherein the resource must prove compliance with the trusted computing policy by providing a remote attestation which proves the resource has the certain identity, configuration, behavior, or property.

10. The method of any of claims 8-9, wherein the trusted computing policy specifies a requirement that a resource with which the service is to be orchestrated must execute a certain software image or version, must execute software provided by a certain software provider, must execute software accredited by a certain software accreditor, must have certain hardware, must have hardware provided by a certain hardware manufacturer, must have hardware accredited by a certain hardware accreditor, or any combination thereof.

11. A method performed by resource equipment configured to be or host a resource for providing at least a part of a service, the method comprising:
receiving, (1500), from an orchestrator, signaling that requests the resource to prove that the resource complies with a trusted computing policy indicated by the signaling, in order for the service to be orchestrated with the resource; and
sending, (1510), to the orchestrator, a response which proves that the resource complies with the trusted computing policy indicated by the signaling.

12. The method of claim 11, wherein the trusted computing policy specifies a requirement that the resource must have a certain identity, configuration, behavior, or property, and wherein the response comprises a remote attestation which proves the resource has the certain identity, configuration, behavior, or property.

13. The method of any of claims 11-12, wherein the trusted computing policy specifies a requirement that the resource must execute a certain software image or version, must execute software provided by a certain software provider, must execute software accredited by a certain software accreditor, must have certain hardware, must have hardware provided by a certain hardware manufacturer, must have hardware accredited by a certain hardware accreditor, or any combination thereof.

14. An orchestrator comprising:
processing circuitry and memory, the memory containing instructions executable by the processing circuitry whereby the orchestrator is configured to perform any of the steps of any of the claims 1-7.

15. Customer premises equipment comprising:
processing circuitry and memory, the memory containing instructions executable by the processing circuitry whereby the customer premises equipment is configured to perform any of the steps of any of the claims 8-10.

16. Resource equipment comprising:
processing circuitry and memory, the memory containing instructions executable by the processing circuitry whereby the resource equipment is configured to perform any of the steps of any of the claims 11-13.

17. A computer program comprising instructions which, when executed by at least one processor of an orchestrator, causes the orchestrator to carry out the steps of any of the claims 1-7, or when executed by at least one processor of a customer premises equipment, causes the customer premises equipment to carry out the steps of any of the claims 8-10, or when executed by at least one processor of a resource equipment, causes the resource equipment to carry out the steps of any of the claims 11-13.

## Patentansprüche

1. Verfahren, das von einem Orchestrator durchgeführt wird, wobei das Verfahren umfasst:
Empfangen von Signalisierung (1300) von einer kundenseitigen Ausrüstung, die den Orchestrator auffordert, einen Dienst zu orchestrieren, und die eine Trusted Computing-Richtlinie angibt, deren Erfüllung eine Ressource beweisen muss, damit der Dienst mit dieser Ressource orchestriert werden kann; und
Senden einer Antwort (1340) an die kundenseitige Ausrüstung, die angibt, ob der Orchestrator den Dienst gemäß der empfangenen Signalisierung orchestriert hat oder nicht, abhängig davon, ob die Ressource die Trusted Computing-Richtlinie erfüllt.

2. Verfahren nach Anspruch 1, wobei die Trusted Computing-Richtlinie eine Anforderung spezifiziert, dass eine Ressource, mit der der Dienst orchestriert werden soll, ein(e) gewisse(s) Identität, Konfiguration, Verhalten oder Eigenschaft aufweisen muss, wobei die Ressource Erfüllung der Trusted Computing-Richtlinie durch Bereitstellen einer Remote-Bescheinigung, die beweist, dass die Ressource die bzw. das gewisse Identität, Konfiguration, Verhalten oder Eigenschaft aufweist, beweisen muss.

3. Verfahren nach einem von Anspruch 1 bis 2, wobei die Trusted Computing-Richtlinie eine Anforderung spezifiziert, dass eine Ressource, mit der der Dienst orchestriert werden soll, ein(e) gewisse(s) Software-Image oder -Version ausführen muss, Software ausführen muss, die von einem gewissen Softwareanbieter bereitgestellt wird, Software ausführen muss, die von einem gewissen Softwareakkreditierer akkreditiert wurde, gewisse Hardware aufweisen muss, Hardware aufweisen muss, die von einem gewissen Hardwarehersteller bereitgestellt wird, Hardware aufweisen muss, die von einem gewissen Hardwareakkreditierer akkreditiert wurde, oder eine Kombination davon.

4. Verfahren nach einem der Ansprüche 1 bis 3, weiter umfassend:
Anfordern einer Remote-Bescheinigung bei einer Ressource, die vorgibt, Erfüllung der Trusted Computing-Richtlinie zu beweisen; und
Empfangen der angeforderten Remote-Bescheinigung von der Ressource.

5. Verfahren nach Anspruch 4, wobei die Antwort auf Basis dessen, dass der Orchestrator die empfangene Remote-Bescheinigung verifiziert, eine Remote-Bescheinigung beinhaltet, die beweist, dass der Orchestrator selbst die Trusted Computing-Richtlinie erfüllt, und die implizit angibt, dass eine Ressource, mit der der Dienst orchestriert wird, Erfüllung der Trusted Computing-Richtlinie bewiesen hat.

6. Verfahren nach einem der Ansprüche 1-5, wobei die Signalisierung eine oder mehrere Bedingungen angibt, unter denen Beweis von Erfüllung der Trusted Computing-Richtlinie von einer Ressource gefordert wird.

7. Verfahren nach einem der Ansprüche 1-6, wobei die Signalisierung auch fordert, dass der Orchestrator selbst beweist, dass der Orchestrator die Trusted Computing-Richtlinie erfüllt, und wobei die Antwort eine Remote-Bescheinigung beinhaltet, die beweist, dass der Orchestrator selbst die Trusted Computing-Richtlinie erfüllt.

8. Verfahren, das von kundenseitiger Ausrüstung durchgeführt wird, wobei das Verfahren umfasst:
Übertragen (1400), von der kundenseitigen Ausrüstung, von Signalisierung an einen Orchestrator, die den Orchestrator auffordert, einen Dienst für die kundenseitige Ausrüstung zu orchestrieren, und die eine Trusted Computing-Richtlinie angibt, deren Erfüllung eine Ressource beweisen muss, damit der Dienst mit dieser Ressource orchestriert werden kann; und
Empfangen (1410), vom Orchestrator, einer Antwort, die angibt, ob der Orchestrator den Dienst für die kundenseitige Ausrüstung gemäß der Signalisierung orchestriert hat oder nicht, abhängig davon, ob die Ressource die Trusted Computing-Richtlinie erfüllt.

9. Verfahren nach Anspruch 8, wobei die Trusted Computing-Richtlinie eine Anforderung spezifiziert, dass eine Ressource, mit der der Dienst orchestriert werden soll, ein(e) gewisse(s) Identität, Konfiguration, Verhalten oder Eigenschaft aufweisen muss, wobei die Ressource Erfüllung der Trusted Computing-Richtlinie durch Bereitstellen einer Remote-Bescheinigung, die beweist, dass die Ressource die bzw. das gewisse Identität, Konfiguration, Verhalten oder Eigenschaft aufweist, beweisen muss.

10. Verfahren nach einem der Ansprüche 8-9, wobei die Trusted Computing-Richtlinie eine Anforderung spezifiziert, dass eine Ressource, mit der der Dienst orchestriert werden soll, ein(e) gewisse(s) Software-Image oder -Version ausführen muss, Software ausführen muss, die von einem gewissen Softwareanbieter bereitgestellt wird, Software ausführen muss, die von einem gewissen Softwareakkreditierer akkreditiert wurde, gewisse Hardware aufweisen muss, Hardware aufweisen muss, die von einem gewissen Hardwarehersteller bereitgestellt wird, Hardware aufweisen muss, die von einem gewissen Hardwareakkreditierer akkreditiert wurde, oder eine Kombination davon.

11. Verfahren, das von Ressourcenausrüstung durchgeführt wird, die so konfiguriert ist, dass sie eine Ressource zum Bereitstellen mindestens eines Teils eines Dienstes ist oder hostet, wobei das Verfahren umfasst:
Empfangen (1500) von Signalisierung von einem Orchestrator, die die Ressource auffordert, zu beweisen, dass die Ressource eine durch die Signalisierung angegebene Trusted Computing-Richtlinie erfüllt, damit der Dienst mit der Ressource orchestriert werden kann; und
Senden (1510) einer Antwort an den Orchestrator, die beweist, dass die Ressource die durch die Signalisierung angegebene Trusted Computing-Richtlinie erfüllt.

12. Verfahren nach Anspruch 11, wobei die Trusted Computing-Richtlinie eine Anforderung spezifiziert, dass die Ressource ein(e) gewisse(s) Identität, Konfiguration, Verhalten oder Eigenschaft aufweisen muss, und wobei die Antwort eine Remote-Bescheinigung umfasst, die beweist, dass die Ressource die bzw. das gewisse Identität, Konfiguration, Verhalten oder Eigenschaft aufweist.

13. Verfahren nach einem der Ansprüche 11-12, wobei die Trusted Computing-Richtlinie eine Anforderung spezifiziert, dass die Ressource ein(e) gewisse(s) Software-Image oder -Version ausführen muss, Software ausführen muss, die von einem gewissen Softwareanbieter bereitgestellt wird, Software ausführen muss, die von einem gewissen Softwareakkreditierer akkreditiert wurde, gewisse Hardware aufweisen muss, Hardware aufweisen muss, die von einem gewissen Hardwarehersteller bereitgestellt wird, Hardware aufweisen muss, die von einem gewissen Hardwareakkreditierer akkreditiert wurde, oder eine Kombination davon.

14. Orchestrator, umfassend:
Verarbeitungsschaltungen und Speicher, wobei der Speicher Anweisungen enthält, die von den Verarbeitungsschaltungen ausgeführt werden können, wodurch der Orchestrator so konfiguriert wird, dass er beliebige der Schritte nach einem der Ansprüche 1-7 durchführt.

15. Kundenseitige Ausrüstung, umfassend:
Verarbeitungsschaltungen und Speicher, wobei der Speicher Anweisungen enthält, die von den Verarbeitungsschaltungen ausgeführt werden können, wodurch die kundenseitige Ausrüstung so konfiguriert wird, dass sie beliebige der Schritte nach einem der Ansprüche 8-10 durchführt.

16. Ressourcenausrüstung, umfassend:
Verarbeitungsschaltungen und Speicher, wobei der Speicher Anweisungen enthält, die von den Verarbeitungsschaltungen ausgeführt werden können, wodurch die Ressourcenausrüstung so konfiguriert wird, dass sie beliebige der Schritte nach einem der Ansprüche 11-13 durchführt.

17. Computerprogramm, das Anweisungen umfasst, die, wenn sie von mindestens einem Prozessor eines Orchestrators ausgeführt werden, bewirken, dass der Orchestrator die Schritte eines der Ansprüche 1-7 ausführt, oder, wenn sie von mindestens einem Prozessor einer kundenseitigen Ausrüstung ausgeführt werden, bewirken, dass die kundenseitige Ausrüstung die Schritte eines der Ansprüche 8-10 ausführt, oder, wenn sie von mindestens einem Prozessor einer Ressourcenausrüstung ausgeführt werden, bewirken, dass die Ressourcenausrüstung die Schritte eines der Ansprüche 11-13 ausführt.

## Revendications

1. Procédé réalisé par un orchestrateur, le procédé comprenant :
la réception d'une signalisation (1300), en provenance d'un équipement de locaux de client, qui demande à l'orchestrateur d'orchestrer un service et qui indique une politique informatique de confiance avec laquelle une ressource doit prouver sa conformité afin que le service soit orchestré avec cette ressource ; et
l'envoi d'une réponse (1340) à l'équipement de locaux de client qui indique si l'orchestrateur a orchestré, ou non, le service conformément à la signalisation reçue, selon que la ressource est, ou non, conforme à la politique informatique de confiance.

2. Procédé selon la revendication 1, dans lequel la politique informatique de confiance spécifie une exigence selon laquelle une ressource avec laquelle le service doit être orchestré, doit présenter une certaine identité, une certaine configuration, un certain comportement ou une certaine propriété, dans lequel la ressource doit prouver sa conformité à la politique informatique de confiance en fournissant une attestation à distance qui prouve que la ressource présente la certaine identité, la certaine configuration, le certain comportement ou la certaine propriété.

3. Procédé selon l'une quelconque des revendications 1 à 2, dans lequel la politique informatique de confiance spécifie une exigence selon laquelle une ressource avec laquelle le service doit être orchestré, doit exécuter une certaine image, ou version, de logiciel, doit exécuter un logiciel fourni par un certain fournisseur de logiciel, doit exécuter un logiciel accrédité par un certain accréditeur de logiciel, doit présenter un certain matériel, doit présenter du matériel fourni par un certain fabricant de matériel, doit présenter du matériel accrédité par un certain accréditeur de matériel, ou n'importe quelle combinaison de ceux-ci.

4. Procédé selon l'une quelconque des revendications 1 à 3, comprenant en outre :
la demande d'une ressource pour une attestation à distance qui revendique prouver la conformité à la politique informatique de confiance ; et
la réception de l'attestation à distance demandée en provenance de la ressource.

5. Procédé selon la revendication 4, dans lequel, sur la base de la vérification par l'orchestrateur de l'attestation à distance reçue, la réponse inclut une attestation à distance qui prouve que l'orchestrateur lui-même est conforme à la politique informatique de confiance et qui indique implicitement qu'une ressource avec laquelle le service est orchestré a prouvé sa conformité à la politique informatique de confiance.

6. Procédé selon l'une quelconque des revendications 1-5, dans lequel la signalisation indique une ou plusieurs conditions dans lesquelles la preuve de conformité à la politique informatique de confiance est requise d'une ressource.

7. Procédé selon l'une quelconque des revendications 1-6, dans lequel la signalisation demande également que l'orchestrateur lui-même prouve que l'orchestrateur est conforme à la politique informatique de confiance, et dans lequel la réponse inclut une attestation à distance qui prouve que l'orchestrateur lui-même est conforme à la politique informatique de confiance.

8. Procédé réalisé par un équipement de locaux de client, le procédé comprenant :
la transmission (1400), à partir de l'équipement de locaux de client à un orchestrateur, d'une signalisation qui demande à l'orchestrateur d'orchestrer un service pour l'équipement de locaux de client et qui indique une politique informatique de confiance à laquelle une ressource doit prouver sa conformité pour que le service soit orchestré avec cette ressource ; et
la réception (1410), en provenance de l'orchestrateur, d'une réponse qui indique si l'orchestrateur a, ou non, orchestré le service pour l'équipement de locaux de client conformément à la signalisation, selon que la ressource est, ou non, conforme à la politique informatique de confiance.

9. Procédé selon la revendication 8, dans lequel la politique informatique de confiance spécifie une exigence selon laquelle une ressource avec laquelle le service doit être orchestré, doit présenter une certaine identité, une certaine configuration, un certain comportement ou une certaine propriété, dans lequel la ressource doit prouver sa conformité à la politique informatique de confiance en fournissant une attestation à distance qui prouve que la ressource présente la certaine identité, la certaine configuration, le certain comportement ou la certaine propriété.

10. Procédé selon l'une quelconque des revendications 8-9, dans lequel la politique informatique de confiance spécifie une exigence selon laquelle une ressource avec laquelle le service doit être orchestré, doit exécuter une certaine image, ou version, de logiciel, doit exécuter un logiciel fourni par un certain fournisseur de logiciel, doit exécuter un logiciel accrédité par un certain accréditeur de logiciel, doit présenter un certain matériel, doit présenter du matériel fourni par un certain fabricant de matériel, doit présenter du matériel accrédité par un certain accréditeur de matériel, ou n'importe quelle combinaison de ceux-ci.

11. Procédé exécuté par un équipement de ressource configuré pour être ou héberger une ressource pour fournir au moins une partie d'un service, le procédé comprenant :
la réception, (1500), en provenance d'un orchestrateur, d'une signalisation qui demande à la ressource de prouver que la ressource est conforme à une politique informatique de confiance indiquée par la signalisation afin que le service soit orchestré avec la ressource ; et
l'envoi, (1510), à l'orchestrateur, d'une réponse qui prouve que la ressource est conforme à la politique informatique de confiance indiquée par la signalisation.

12. Procédé selon la revendication 11, dans lequel la politique informatique de confiance spécifie une exigence selon laquelle la ressource doit présente une certaine identité, une certaine configuration, un certain comportement ou une certaine propriété, et dans lequel la réponse comprend une attestation à distance qui prouve que la ressource présente la certaine identité, la certaine configuration, le certain comportement ou la certaine propriété.

13. Procédé selon l'une quelconque des revendications 11-12, dans lequel la politique informatique de confiance spécifie une exigence selon laquelle la ressource doit exécuter une certaine image, ou version, de logiciel, doit exécuter un logiciel fourni par un certain fournisseur de logiciel, doit exécuter un logiciel accrédité par un certain accréditeur de logiciel, doit présenter un certain matériel, doit présenter du matériel fourni par un certain fabricant de matériel, doit présenter du matériel accrédité par un certain accréditeur de matériel, ou n'importe quelle combinaison de ceux-ci.

14. Orchestrateur, comprenant :
un ensemble de circuits de traitement et une mémoire, la mémoire contenant des instructions exécutables par l'ensemble de circuits de traitement, selon lequel l'orchestrateur est configuré pour réaliser l'une quelconque des étapes de l'une quelconque des revendications 1-7.

15. Équipement de locaux de client, comprenant :
un ensemble de circuits de traitement et une mémoire, la mémoire contenant des instructions exécutables par l'ensemble de circuits de traitement, selon lequel l'équipement de locaux de client est configuré pour réaliser l'une quelconque des étapes de l'une quelconque des revendications 8-10.

16. Équipement de ressource, comprenant :
un ensemble de circuits de traitement et une mémoire, la mémoire contenant des instructions exécutables par l'ensemble de circuits de traitement, selon lequel l'équipement de ressource est configuré pour réaliser l'une quelconque des étapes de l'une quelconque des revendications 11-13.

17. Programme informatique comprenant des instructions qui, lorsqu'elles sont exécutées par au moins un processeur d'un orchestrateur, amènent l'orchestrateur à exécuter les étapes de l'une quelconque des revendications 1-7, ou, lorsqu'elles sont exécutées par au moins un processeur d'un équipement de locaux de client, amènent l'équipement de locaux de client à exécuter les étapes de l'une quelconque des revendications 8-10, ou, lorsqu'elles sont exécutées par au moins un processeur d'un équipement de ressource, amènent l'équipement de ressources à exécuter les étapes de l'une quelconque des revendications 11-13.
